# EUROPEAN PATENT APPLICATION

(11) **EP 4 848 169 A1**
(43) Date of publication of application: **02.12.2026**
(21) Application number: 26180859.6
(22) Date of filing: 25.05.2026
(51) Int. Cl.: G06Q 10/0631

(54) **WORK ASSIST SYSTEM AND WORK ASSIST METHOD**

(30) Priority: 30.05.2025 JP 2025090744
(71) Applicant: Toyota Jidosha Kabushiki Kaisha, Toyota-shi, Aichi-ken 471-8571 (JP)
(72) Inventor: MIURA, Keisuke, TOYOTA-SHI, AICHI-KEN, 471-8571 (JP); TSUBAKI, Yuta, TOYOTA-SHI, AICHI-KEN, 471-8571 (JP)
(74) Representative: Cabinet Beau de Loménie

(57) **Abstract**

A work assist system includes a first acquisition unit, a second acquisition unit, a first identification unit, a second identification unit, and a synchronization unit. The first acquisition unit acquires first time-series data from a camera that images work by a worker. The second acquisition unit acquires second time-series data from a sensor that senses the work. The first identification unit identifies a first time at which a specific operation is performed in the first time-series data. The second identification unit identifies a second time at which the specific operation is performed in the second time-series data. The synchronization unit makes the first time and the second time correspond to each other to time-synchronize the first time-series data and the second time-series data.

## Description

### BACKGROUND

### FIELD

The present disclosure relates to a work assist system and a work assist method.

### RELATED ART

Conventionally, in a known technology, actions of a worker are estimated by a machine learning model using time-series data related to the actions of the worker (JP2024-20821A).

In time-series data acquired from a plurality of sensors, times assigned to the data detected by the plurality of sensors at the same timing may differ.

### SUMMARY

The present disclosure can be implemented as the following aspects.
(1) According to one aspect of the present disclosure, a work assist system is provided. The work assist system includes a first acquisition unit, a second acquisition unit, a first identification unit, a second identification unit, and a synchronization unit. The first acquisition unit acquires first time-series data from a camera that images work by a worker. The second acquisition unit acquires second time-series data from a sensor that senses the work. The first identification unit identifies a first time at which a specific operation is performed in the first time-series data. The second identification unit identifies a second time at which the specific operation is performed in the second time-series data. The synchronization unit makes the first time and the second time correspond to each other to time-synchronize the first time-series data and the second time-series data. According to this aspect, the work assist system makes the times at which the specific operation is performed in the respective pieces of the time-series data correspond to each other, and thereby can time-synchronize the time-series data acquired from the camera and the time-series data acquired from the sensor that senses the work.
(2) In the above-described aspect, the first identification unit may input the first time-series data into a first model and cause the first model to output the first time to identify the first time. The first model may be a trained machine learning model. The second identification unit may input the second time-series data into a second model and cause the second model to output the second time to identify the second time. The second model may be a trained machine learning model different from the first model. The first model may estimate a type of an operation of the worker in each period in the input first time-series data and identify a period in which the specific operation is performed in the first time-series data to output the first time. The second model may estimate the type of the operation of the worker in each period in the input second time-series data and identify a period in which the specific operation is performed in the second time-series data to output the second time. According to this aspect, the work assist system can utilize the machine learning models corresponding to the first time-series data and the second time-series data to easily identify the times at which the specific operation is performed in the respective pieces of the time-series data.
(3) The above-described aspect may further include a memory storing at least one of a first database and a second database. The first database may indicate confidence of the type of the operation estimated by using the first model for each of a plurality of the operations different from each other. The second database may indicate confidence of the type of the operation estimated by using the second model for each of the plurality of different operations. The first identification unit may identify the first time for each of a plurality of the specific operations of the same type or different types. The second identification unit may identify the second time for each of the plurality of specific operations. The synchronization unit may make the first time and the second time correspond to each other for two of the specific operations with the highest and second highest confidence among the plurality of specific operations for which both of the types of the operations and time widths between the operations are consistent between the first time-series data and the second time-series data, to time-synchronize the first time-series data and the second time-series data. According to this aspect, the work assist system makes the times for the two specific operations with the highest and second highest confidence correspond to each other, and thereby can time-synchronize the time-series data acquired from the camera and the time-series data acquired from the sensor that senses the work. Moreover, according to this aspect, the work assist system makes the times for the two specific operations for which the types of the operations and the time widths between the operations are consistent correspond to each other, and thereby can time-synchronize the time-series data acquired from the camera and the time-series data acquired from the sensor that senses the work. In such an aspect, the work assist system can time-synchronize the time-series data acquired from the camera and the time-series data acquired from the sensor that senses the work with high precision.
(4) In the above-described aspect, when ranking of magnitudes of the confidence for respective operations differs between the first model and the second model, the synchronization unit may preferentially make the first time and the second time correspond to each other for two of the specific operations with the highest and second highest confidence of the type of the operation estimated by using the machine learning model into which, between the first time-series data and the second time-series data, time-series data having a smaller amount of information for estimating the type of the operation is input, to time-synchronize the first time-series data and the second time-series data. According to this aspect, the work assist system can prioritize the confidence for the machine learning model corresponding to the time-series data having a smaller amount of information for estimating the type of the operation and having higher difficulty in estimating the type of the operation. In such an aspect, the work assist system can time-synchronize the time-series data acquired from the camera and the time-series data acquired from the sensor that senses the work with high precision even with a limited amount of information.
(5) The above-described aspect may further include a determination unit and an estimation unit. The determination unit may determine a work start time at which a predetermined start operation is performed in the first time-series data and determine a work end time at which a predetermined end operation is performed in the first time-series data. The estimation unit may estimate the work start time and the work end time in the second time-series data from the work start time and the work end time which are determined in the first time-series data. According to this aspect, the work assist system can operate as follows by utilizing the time synchronization between the time-series data acquired from the camera and the time-series data acquired from the sensor that senses the work. The work assist system can estimate the work start time and the work end time in the time-series data acquired from the sensor that senses the work, based on the work start time and the work end time which are determined in the time-series data acquired from the camera.
(6) The above-described aspect may further include a display control unit that causes a display device to display the first time-series data and the second time-series data which are time-synchronized. According to this aspect, the work assist system can cause the display device to display in parallel the time-series data at the same time point. Accordingly, the work assist system can assist in management of a work situation and proficiency acquisition of the worker.
(7) In the above-described aspect, the camera may be a wearable camera attached to the worker and capable of acquiring the first time-series data of a first-person point of view that is a viewpoint from the worker. According to this aspect, the work assist system acquires the time-series data from the wearable camera, and thereby can capture detailed motion of the worker. Accordingly, the work assist system can more accurately identify the time at which the specific operation is performed in the time-series data acquired from the camera. Therefore, the work assist system can time-synchronize the time-series data acquired from the camera and the time-series data acquired from the sensor that senses the work with high precision.
(8) In the above-described aspect, the camera may be a fixed-point camera installed at a work place at which the worker performs the work and capable of acquiring the first time-series data of a third-person point of view that is a viewpoint from a third party seeing the worker. According to this aspect, the work assist system can acquire the time-series data from the fixed-point camera without having the worker wear the wearable camera. Accordingly, the worker can have a reduced load.
(9) In the above-described aspect, the sensor may include at least one of a pressure sensor to detect a change in pressure accompanying the operation of the worker, a microphone to detect a sound around the worker, an acceleration sensor to detect a change in acceleration accompanying the operation of the worker, and a gyro sensor to detect a change in angular velocity accompanying the operation of the worker. According to this aspect, the work assist system detects a characteristic change in pressure for each operation of the worker from the time-series data acquired from the pressure sensor, and thereby can identify the time at which the specific operation is performed. Further, according to this aspect, the work assist system detects a characteristic sound for each operation of the worker from the time-series data acquired from the microphone, and thereby can identify the time at which the specific operation is performed. Furthermore, according to this aspect, the work assist system detects a characteristic change in inertial force corresponding to the operation of the worker from the time-series data acquired from the acceleration sensor and the gyro sensor, and thereby can identify the time at which the specific operation is performed.
(10) In the above-described aspect, the specific operation may be at least one of a tightening operation of tightening a component to a target object, a taking-out operation of taking out a predetermined object, a fitting operation of fitting two or more of the components, and an insertion operation of inserting the component into the target object. According to this aspect, the work assist system makes the times at which at least any one of the tightening operation, the taking-out operation, the fitting operation, and the insertion operation is performed correspond to each other, and thereby can time-synchronize the time-series data acquired from the camera and the time-series data acquired from the sensor that senses the work.
(11) According to another aspect of the present disclosure, a work assist method is provided. The work assist method includes an identification step and a synchronization step. In the identification step, a first time at which a specific operation is performed in first time-series data acquired from a camera that images work by a worker is identified, and a second time at which the specific operation is performed in second time-series data acquired from a sensor that senses the work is identified. In the synchronization step, the first time and the second time are made to correspond to each other to time-synchronize the first time-series data and the second time-series data. According to this aspect, in the work assist method, the times at which the specific operation is performed in the respective pieces of the time-series data are made to correspond to each other, and thereby the time-series data acquired from the camera and the time-series data acquired from the sensor that senses the work can be time-synchronized.

The present disclosure can be implemented in various aspects other than the work assist system and the work assist method described above. For example, the present disclosure can be implemented in aspects, such as a computer program for implementing a work assist method and a non-transitory recording medium recording the computer program.

### BRIEF DESCRIPTION OF THE DRAWINGS

Fig. 1 is an explanatory diagram illustrating a schematic configuration of a work assist system according to a first embodiment;
Fig. 2 is a flowchart illustrating a work assist method according to the first embodiment;
Fig. 3 is a schematic diagram illustrating an example of first time-series data acquired from a fixed-point camera;
Fig. 4 is a schematic diagram illustrating an example of first time-series data acquired from a wearable camera;
Fig. 5 is a schematic diagram illustrating an example of second time-series data acquired in tightening operation;
Fig. 6 is a diagram illustrating a specific example of a method for identifying a first time;
Fig. 7 is a schematic diagram illustrating a first time identified based on first time-series data;
Fig. 8 is a schematic diagram illustrating a second time identified based on second time-series data;
Fig. 9 is a diagram illustrating a specific example of a time synchronization method;
Fig. 10 is an explanatory diagram illustrating a schematic configuration of a work assist system according to a second embodiment;
Fig. 11 is a flowchart illustrating a work assist method according to the second embodiment;
Fig. 12 is a diagram illustrating a specific example of a time synchronization method in accordance with confidence;
Fig. 13 is an explanatory diagram illustrating a schematic configuration of a work assist system according to a third embodiment;
Fig. 14 is a flowchart illustrating a work assist method according to the third embodiment;
Fig. 15 is a diagram illustrating a specific example of a method for determining a work start time and a work end time;
Fig. 16 is a diagram illustrating a specific example of a method for estimating a work start time and a work end time;
Fig. 17 is an explanatory diagram illustrating a schematic configuration of a work assist system according to a fourth embodiment;
Fig. 18 is a flowchart illustrating a work assist method according to the fourth embodiment;
Fig. 19 is a schematic diagram illustrating an example of a screen displayed on a display device;
Fig. 20 is a schematic diagram illustrating an example of second time-series data acquired in taking-out operation;
Fig. 21 is a schematic diagram illustrating an example of second time-series data acquired in fitting operation;
Fig. 22 is a schematic diagram illustrating an example of second time-series data acquired in insertion operation; and
Fig. 23 is an explanatory diagram illustrating a schematic configuration of a work assist system according to an eighth embodiment.

### DETAILED DESCRIPTION

### A. First Embodiment:

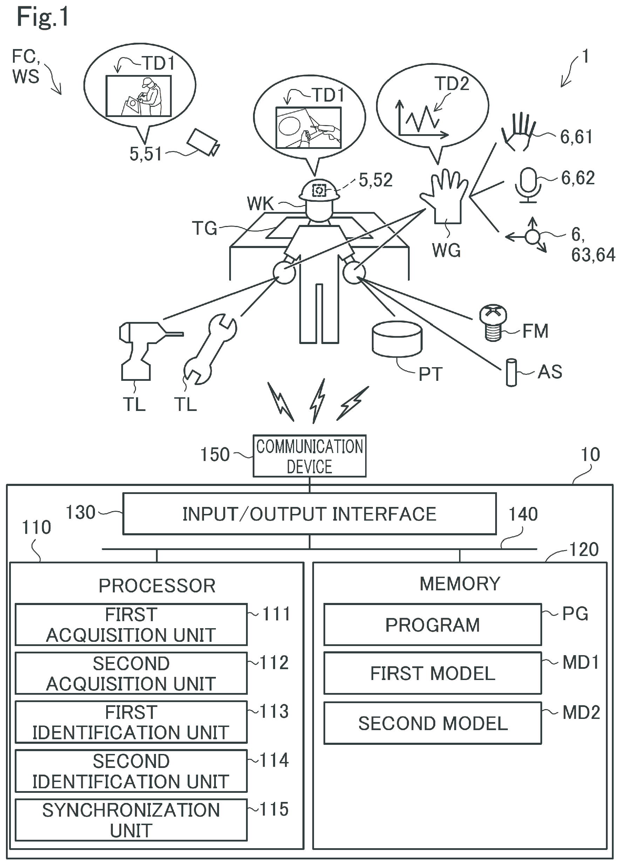

Fig. 1 is an explanatory diagram illustrating a schematic configuration of a work assist system 1 according to a first embodiment. The work assist system 1 is a system that assists in work by a worker WK. For example, the work assist system 1 contributes to an improvement in work recognition precision. For example, as a result of an improvement in the work recognition precision, whether work is being performed following a predetermined procedure can be appropriately evaluated, and the worker WK can be provided with an appropriate instruction in accordance with a content and progress of the work and characteristics of the worker WK. Accordingly, the work assist system 1 can assist in management of a work situation and proficiency acquisition of the worker WK.

The work assist system 1 is used in a work place WS where the worker WK performs work. The work place WS in this embodiment is a factory FC in which vehicles are produced. The work in this embodiment includes various works for producing a vehicle, and includes, for example, a work related to assembly of the vehicle, a work related to attachment of a component PT to the vehicle, and a work related to inspection of the vehicle. Each of these works includes one or more operations to achieve the work.

Operations by the worker WK can be classified according to purposes and characteristics of the operations. The operations by the worker WK include operations directly related to vehicle production, for example, operations classified according to types, such as "tightening", "fitting", and "insertion". "Tightening operation" means an operation of tightening the component PT such as a speaker to a target object TG such as a vehicle body with a tightening member FM, such as a bolt, a nut, and a screw, using a tool TL, such as an impact wrench and an impact driver. "Fitting operation" means an operation of fitting two or more components PT by fitting connectors provided to the components PT. "Insertion operation" means an operation of inserting the component PT into the target object TG by inserting a joining part, such as a snap-fit provided to the component PT, into a joined part of the target object TG. Furthermore, the operations by the worker WK include operations indirectly related to the vehicle production, for example, operations classified according to types, such as "taking-out", "attaching", "placing", "returning", "moving", and "walking". "Taking-out operation" means an operation of taking out various objects, such as the tool TL, an accessory AS such as a socket to be attached to the tool TL, the component PT, and the tightening member FM, from a predetermined storage place. "Attaching operation" means an operation of attaching the accessory AS to the tool TL. "Placing operation" means an operation of placing the component PT at a predetermined work position of the target object TG, such as a tightening position of the component PT. "Returning operation" means an operation of returning the tool TL to the predetermined storage place. "Moving operation" means an operation of moving a product after completion of the work, so that the product after completion of the work flows to a subsequent process. "Walking operation" means an operation of walking to another place, such as a place for working on the next product. Note that the types of operations are not limited to those described above.

The work assist system 1 includes one or more cameras 5, one or more glove sensors 6, and a work assist device 10. In this embodiment, the work assist device 10 time-synchronizes time-series data output from the camera 5 and the glove sensor 6 to assist in work by the worker WK.

The camera 5 continuously images the work by the worker WK and outputs first time-series data TD1 including a plurality of images arranged in time series. That is, the first time-series data TD1 is moving image data captured on a time axis unique to the camera 5, and is a collection of images associated with times represented on the time axis (first time axis) of the camera 5. For example, the camera 5 outputs images of two or more frames per second. The camera 5 may be a fixed-point camera 51 or may be a wearable camera 52. The fixed-point camera 51 is the camera 5 installed at the work place WS and images the work place WS in a bird's-eye view. The fixed-point camera 51 images the worker WK from outside, and thereby can acquire the first time-series data TD1 in a third-person point of view, which is a viewpoint from a third party seeing the worker WK. The wearable camera 52 is the camera 5 attached to the worker WK, and is, for example, attached to a head of the worker WK in such a manner that at least a part of an imaging range overlaps a field of view of the worker WK. For example, the wearable camera 52 may be attached to a head-mounted object, such as a helmet and a work cap, or may be configured integrally with eyewear, such as goggles and glasses. The wearable camera 52 images a region corresponding to at least a part of the field of view of the worker WK, and thereby can acquire the first time-series data TD1 of a first-person point of view, which is a viewpoint from the worker WK. The wearable camera 52 is also referred to as a first person view (FPV) camera or a first-person camera.

The glove sensor 6 is an example of a sensor that senses work by the worker WK. The glove sensor 6 continuously detects physical quantities related to a hand of the worker WK or its surrounding environment and outputs second time-series data TD2 including actual measurement values of a plurality of physical quantities arranged in time series. That is, in this embodiment, the second time-series data TD2 is waveform data representing time-dependent change in actual measurement values of physical quantities acquired on a time axis unique to the glove sensor 6, and is a collection of actual measurement values of physical quantities associated with times represented on the time axis (second time axis) of the glove sensor 6. The glove sensor 6 is attached to the hand of the worker WK. For example, the glove sensor 6 may be attached in advance to a glove WG that covers at least a part of the entire hand including fingers and a wrist of the worker WK, or may be built-in in advance to a wearable device worn on the fingers, the wrist, a forearm, or the like of the worker WK. Note that the glove sensor 6 may be attached to both hands of the worker WK, or may be attached to only one hand such as a dominant hand. Further, the glove sensor 6 may include a plurality of sensors of the same type, or may include a plurality of sensors of different types.

For example, the glove sensor 6 includes at least any one of a pressure sensor 61, a microphone 62, an acceleration sensor 63, and a gyro sensor 64. The pressure sensor 61 is a sensor to detect a change in pressure accompanying operation of the worker WK. The microphone 62 is a sensor to detect a sound around the worker WK. The acceleration sensor 63 is a sensor to detect a change in acceleration accompanying operation of the worker WK. The gyro sensor 64 is a sensor to detect a change in angular velocity accompanying operation of the worker WK.

The acceleration sensor 63 and the gyro sensor 64 may be attached to an observation target object, such as the hand of the worker WK, as an inertial measurement unit (IMU) with the acceleration sensor 63 and the gyro sensor 64 integrated together. For example, the inertial measurement unit is a composite of multiple types of sensors including the 3-axis acceleration sensor 63, the 3-axis gyro sensor 64, and a 3-axis geomagnetic sensor. The 3-axis acceleration sensor 63 included in the IMU detects magnitudes of acceleration in x, y, and z-axis directions of a sensor coordinate system of the IMU. The 3-axis gyro sensor 64 included in the IMU detects magnitudes of angular velocity in the x, y, and z-axis directions of the sensor coordinate system of the IMU. The 3-axis geomagnetic sensor included in the IMU detects magnitudes of geomagnetism in the x, y, and z-axis directions of the sensor coordinate system of the IMU. Thereby, the IMU can detect the magnitude and direction of acceleration, the magnitude and direction of angular velocity, and the direction of geomagnetism in the sensor coordinate system of the IMU, and based on these, a position and a posture of the observation target object to which the IMU is mounted are detectable.

Note that the types of the glove sensor 6 are not limited to those described above. The glove sensor 6 may include another type of sensor, such as a bend sensor, a vibration sensor, a vital sensor, and an area sensor. The bend sensor is a sensor to detect a degree of a bend of the observation target object, such as the fingers and wrist of the worker WK. The vibration sensor is a sensor to detect vibration applied to the observation target object, such as the hand of the worker WK. The vital sensor is a sensor to detect vital signs, such as a heart rate, a blood pressure, and a body temperature of the worker WK. The area sensor is a sensor to detect entry into and exit from a specific area in the work place WS.

The work assist device 10 includes a computer including a processor 110, a memory 120, an input/output interface 130, an internal bus 140, and a communication device 150. The processor 110, the memory 120, and the input/output interface 130 are coupled via the internal bus 140 in a bidirectionally communicable manner. The communication device 150 is coupled to the input/output interface 130. The communication device 150 can communicate with the camera 5 and the glove sensor 6 by wired communication or wireless communication. The processor 110 executes a program PG stored in the memory 120, thus implementing various functions including functions as a first acquisition unit 111, a second acquisition unit 112, a first identification unit 113, a second identification unit 114, and a synchronization unit 115.

The first acquisition unit 111 acquires the first time-series data TD1 from the camera 5. At this time, the first acquisition unit 111 may acquire the first time-series data TD1 from only one camera 5, or may acquire the first time-series data TD1 from each of a plurality of cameras 5 to acquire a plurality of pieces of first time-series data TD1. The first acquisition unit 111 may acquire the first time-series data TD1 from either one of the fixed-point camera 51 and the wearable camera 52, or may acquire the first time-series data TD1 from both the fixed-point camera 51 and the wearable camera 52.

The second acquisition unit 112 acquires the second time-series data TD2 from a sensor that senses work by the worker WK. In this embodiment, the second acquisition unit 112 acquires the second time-series data TD2 from the glove sensor 6. At this time, the second acquisition unit 112 may acquire the second time-series data TD2 from only one sensor included in the glove sensor 6, or may acquire the second time-series data TD2 from each of a plurality of sensors included in the glove sensor 6 to acquire a plurality of pieces of second time-series data TD2. When the second acquisition unit 112 acquires the second time-series data TD2 from each of the plurality of sensors included in the glove sensor 6, the plurality of sensors included in the glove sensor 6 may be of the same type or different types.

The first identification unit 113 identifies a first time on the first time axis. The first time is a time at which a specific operation is performed in the first time-series data TD1. The specific operation is a characteristic operation included in the work, and is, for example, one operation selected from a plurality of operations classified according to the various types described above. For example, the specific operation is at least any one of the tightening operation, the taking-out operation, the fitting operation, and the insertion operation. The specific operation may be another operation such as the returning operation. As described above, the first time-series data TD1 is the time-series data acquired from the camera 5. The camera 5 has the unique first time axis. Therefore, the first time is a time at which the specific operation is performed on the first time axis of the camera 5 from which the first time-series data TD1 is acquired.

For example, the first identification unit 113 uses a first model MD1 to identify the first time on the first time axis. The first model MD1 is a trained machine learning model that identifies and outputs the first time in response to input of the first time-series data TD1. For example, the first model MD1 is prepared inside the work assist system 1 or outside the work assist system 1 and is stored in advance in the memory 120 of the work assist device 10. As the first model MD1, for example, it is possible to use a machine learning model trained to detect various objects included in each image included in the first time-series data TD1 and to be able to identify the first time from information on the detected objects. Specifically, as the first model MD1, for example, it is possible to use a neural network, such as a convolutional neural network (CNN) and a recurrent neural network (RNN), which are trained by supervised learning using a first learning data set. In this first learning data set, for example, correct labels such as labels representing types of various objects and labels representing types of operations of the worker WK are associated with training images capturing the work by the worker WK. Accordingly, the first model MD1 can detect various objects included in each image included in the first time-series data TD1 and execute the following processing based on information on the detected objects. The first model MD1 estimates the type of the operation of the worker WK in each period in the input first time-series data TD1 and identifies a period in which the specific operation is performed in the first time-series data TD1, and thereby can output the first time.

Note that in another embodiment the first identification unit 113 may use a machine learning model other than that described above, such as a random forest and a support vector machine (SVM), as the first model MD1 to identify the first time. Further, the first identification unit 113 does not necessarily use a machine learning model to identify the first time. The first identification unit 113 may use, for example, parameters generated on a rule basis without using a machine learning model to identify the first time.

The second identification unit 114 identifies a second time on the second time axis. The second time is a time at which the specific operation is performed in the second time-series data TD2. Each of the first identification unit 113 and the second identification unit 114 identifies the time for the same specific operation. As described above, in this embodiment, the second time-series data TD2 is the time-series data acquired from the glove sensor 6. The glove sensor 6 has the unique second time axis. Therefore, the second time is a time at which the specific operation is performed on the second time axis of the glove sensor 6 from which the second time-series data TD2 is acquired. In the case in which the second acquisition unit 112 acquires a plurality of pieces of second time-series data TD2, the second identification unit 114 identifies the second time for each of the plurality of pieces of second time-series data TD2.

For example, the second identification unit 114 uses a second model MD2 to identify the second time on the second time axis. The second model MD2 is a trained machine learning model that identifies and outputs the second time in response to input of the second time-series data TD2. For example, the second model MD2 is prepared inside the work assist system 1 or outside the work assist system 1 for each type of the sensor included in the glove sensor 6 and is stored in advance in the memory 120 of the work assist device 10. For example, when the glove sensor 6 includes the pressure sensor 61, the microphone 62, and the acceleration sensor 63, the memory 120 of the work assist device 10 stores the second model MD2 for the pressure sensor 61, the second model MD2 for the microphone 62, and the second model MD2 for the acceleration sensor 63. As the second model MD2, for example, it is possible to use a machine learning model trained to be able to identify the second time based on a characteristic change in physical quantities in the second time-series data TD2. Examples of the characteristic change in physical quantities include a change in amplitude or frequency, or the number of times or a frequency of occurrences of such a change per unit time in the second time-series data TD2. As the second model MD2, for example, it is possible to use a neural network, such as a one-dimensional convolutional neural network (1D-CNN) and a long short-term memory (LSTM) network, which are trained by supervised learning using a second learning data set. For example, this second learning data set includes, as training data, waveform data of the glove sensor 6 during a period in which work is performed by the worker WK. Accordingly, the second model MD2 can execute the following processing based on the characteristic change in physical quantities in the input second time-series data TD2. The second model MD2 estimates the type of the operation of the worker WK in each period in the input second time-series data TD2 and identifies a period in which the specific operation is performed in the second time-series data TD2, and thereby can output the second time.

Note that in another embodiment the second identification unit 114 may use a machine learning model other than that described above as the second model MD2 to identify the second time. Further, the second identification unit 114 does not necessarily use a machine learning model to identify the second time. The second identification unit 114 may use, for example, parameters generated on a rule basis without using a machine learning model to identify the second time.

The synchronization unit 115 makes the first time on the first time axis and the second time on the second time axis correspond to each other, and thereby time-synchronizes the first time-series data TD1 and the second time-series data TD2. In this embodiment, making the first time on the first time axis and the second time on the second time axis correspond to each other means matching the time axes by subtracting a difference between the times from one of the times. For example, the synchronization unit 115 performs time synchronization by shifting a time associated with each piece of data in the second time-series data TD2 to approach a time of the corresponding piece of data in the first time-series data TD1 by a difference (second time - first time) obtained by subtracting the first time from the second time. In the case in which the first identification unit 113 has identified a plurality of first times, or the second identification unit 114 has identified a plurality of second times, the synchronization unit 115 may operate as follows. In this case, the synchronization unit 115 may time-synchronize all the identified first times and all the identified second times.

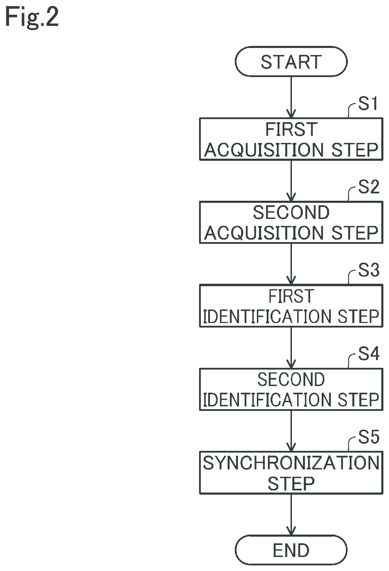

Fig. 2 is a flowchart illustrating a work assist method according to the first embodiment. For example, the flow in Fig. 2 is executed after completion of work by the worker WK.

This embodiment illustrates a method for assisting in work by using the first time-series data TD1 and the second time-series data TD2 for the worker WK who performs a tightening work for tightening the speaker as the component PT to the vehicle body as the target object TG. That is, a case is illustrated in which the specific operation, which is an identification target of the first time and the second time, is the tightening operation. The tightening work in this embodiment is performed by execution of a tightening preparation step, a tightening step, and a tightening ending step in this order. In this embodiment, the tightening preparation step includes the taking-out operation of taking out the impact wrench, the socket, the speaker, the bolt, and the nut from a predetermined storage place, the attaching operation of attaching the socket to the impact wrench, and the placing operation of placing the speaker at a predetermined tightening position of the vehicle body. The tightening step includes the tightening operation of tightening the speaker to the vehicle body with the bolt and the nut by pressing a trigger of the impact wrench having the socket attached thereto three times with a middle finger to cause the impact wrench to rotationally operate. The tightening ending step includes the returning operation of returning the impact wrench to the original storage place.

In a first acquisition step of Step S1, the first acquisition unit 111 acquires the first time-series data TD1 from the camera 5.

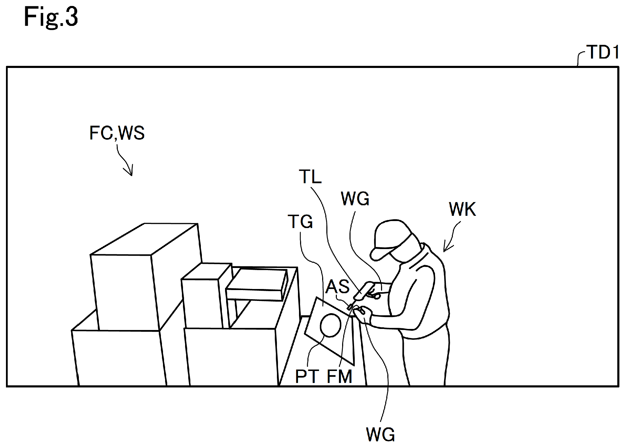

Fig. 3 is a schematic diagram illustrating an example of the first time-series data TD1 acquired from the fixed-point camera 51. Fig. 3 schematically illustrates an image at a certain time point cut out from the first time-series data TD1 acquired from the fixed-point camera 51. In the first time-series data TD1 acquired from the fixed-point camera 51, the entire work place WS is captured in a bird's-eye view. Therefore, from the first time-series data TD1 acquired from the fixed-point camera 51, motion of the entire body of the worker WK can be objectively captured.

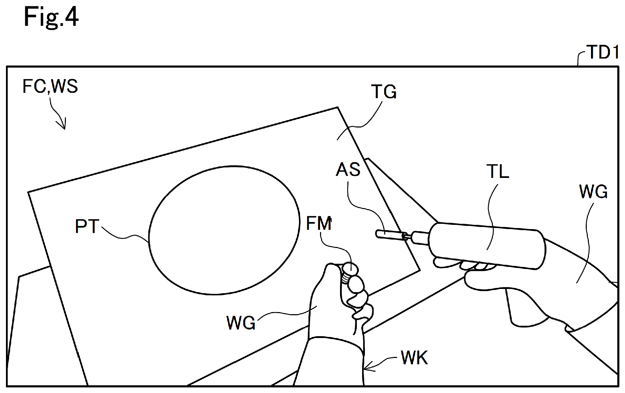

Fig. 4 is a schematic diagram illustrating an example of the first time-series data TD1 acquired from the wearable camera 52. Fig. 4 schematically illustrates an image at a certain time point cut out from the first time-series data TD1 acquired from the wearable camera 52. In the first time-series data TD1 acquired from the wearable camera 52, a work target point such as the hand of the worker WK is captured in detail. Therefore, from the first time-series data TD1 acquired from the wearable camera 52, detailed motion of the worker WK such as hand motion at the work target point can be captured.

As illustrated in Fig. 2, in a second acquisition step of Step S2, the second acquisition unit 112 acquires the second time-series data TD2 from the glove sensor 6.

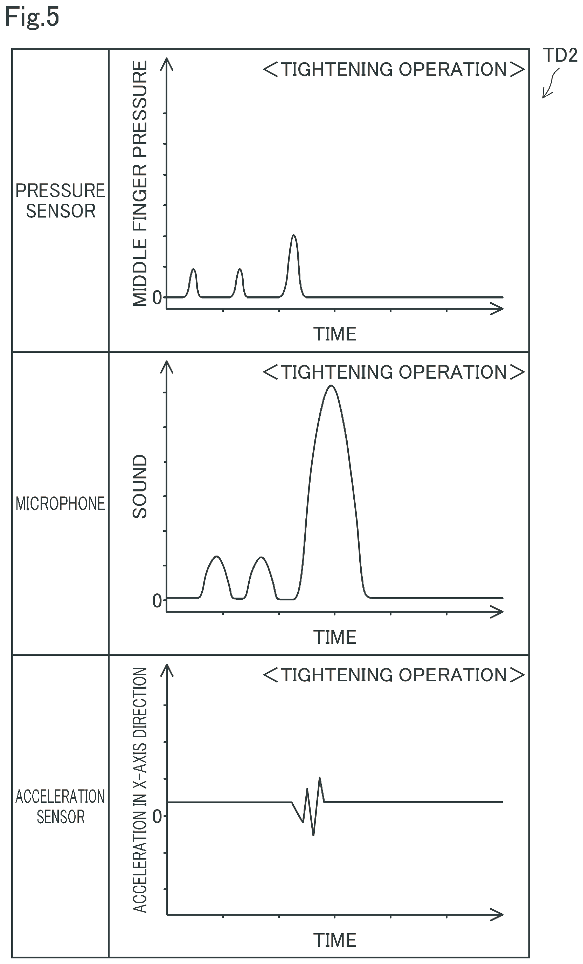

Fig. 5 is a schematic diagram illustrating an example of the second time-series data TD2 acquired from the glove sensor 6 in the tightening operation. Fig. 5 schematically illustrates the second time-series data TD2 acquired from each of the pressure sensor 61 attached to the middle finger of the worker WK, the microphone 62 attached to the hand of the worker WK, and the acceleration sensor 63 attached to the hand of the worker WK in a period including the tightening operation. Note that Fig. 5 illustrates changes in physical quantities per tightening operation.

As described above, in the tightening step of this embodiment, the trigger of the impact wrench is pressed three times with the middle finger in order to cause the impact wrench to rotationally operate. Therefore, in the second time-series data TD2 acquired from the pressure sensor 61, an amplitude largely changes three times in response to the operation of pressing the trigger of the impact wrench with the middle finger. In the tightening step of this embodiment, the impact wrench rotationally operates in response to the third pressing of the trigger. Therefore, in the second time-series data TD2 acquired from the pressure sensor 61, an amount of change in amplitude at the third time is the largest.

Further, in pressing of the trigger of the impact wrench and in rotational operation of the impact wrench, sound is generated. Therefore, in the second time-series data TD2 acquired from the microphone 62, an amplitude largely changes three times in response to the operation of pressing the trigger of the impact wrench with the middle finger. When the impact wrench rotationally operates, sound larger than that when the trigger is pressed is generated. Therefore, in the second time-series data TD2 acquired from the microphone 62, an amount of change in amplitude at the third time is the largest.

Further, in rotational operation of the impact wrench, vibration is applied to the hand of the worker WK. When vibration is applied to the hand of the worker WK, acceleration applied to the hand of the worker WK changes. Therefore, in the second time-series data TD2 acquired from the acceleration sensor 63, an amplitude largely changes when the amplitudes largely change at the third time in the second time-series data TD2 acquired from the pressure sensor 61 and the microphone 62, that is, in rotational operation of the impact wrench. Note that the x, y, and z-axes of the acceleration sensor 63 may vary depending on a product type of the glove WG or a direction of the hand or operating direction of the worker WK at the time of the work. Therefore, vibration applied to the hand of the worker WK may be captured not as a change in acceleration in the x-axis direction as illustrated in Fig. 5, but as a change in acceleration in the y-axis direction or a change in acceleration in the z-axis direction. The x-axis of the acceleration sensor 63 is, for example, an axis in a direction from a thumb toward a little finger with respect to a back of the hand. The y-axis of the acceleration sensor 63 is, for example, an axis in a direction from the wrist toward finger tips with respect to the back or palm of the hand. The z-axis of the acceleration sensor 63 is, for example, an axis in a direction from the palm toward the back of the hand. However, the axial directions of the acceleration sensor 63 are not limited to those described above.

As illustrated in Fig. 2, in a first identification step of Step S3, the first identification unit 113 identifies the first time.

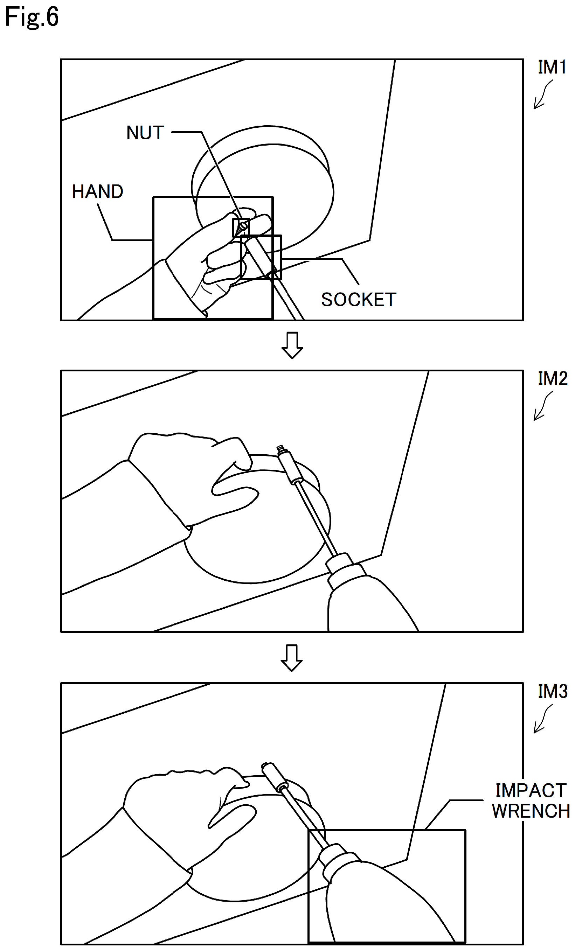

Fig. 6 is a diagram illustrating a specific example of a method for identifying the first time. In Fig. 6, a first image IM1 is an image within a period of the tightening preparation step. A second image IM2 is an image immediately before a start of the tightening step. A third image IM3 is an image within a period of the tightening step. Below, with reference to Fig. 6, a case in which the first time-series data TD1 acquired from the wearable camera 52 is input into the first model MD1 to identify the first time will be described as an example.

When the first time-series data TD1 acquired from the wearable camera 52 is input into the first model MD1, the first model MD1 first detects various objects represented in each of the images IM1 to IM3 included in the input first time-series data TD1. For example, in the example illustrated in Fig. 6, the first model MD1 detects the hand of the worker WK, the nut, and the socket from the first image IM1, and detects the impact wrench from the third image IM3. Next, the first model MD1 identifies a positional relationship of the detected objects. For example, in the example illustrated in Fig. 6, the first model MD1 identifies a positional relationship from the first image IM1 that the nut is present in the hand of the worker WK and the socket is present near the hand of the worker WK. Next, the first model MD1 identifies a chronological relationship of the operations by the worker WK based on the identified positional relationship of the objects and temporal positional changes between frames. For example, in a period from a start of the tightening preparation step to immediately before a start of the tightening step, the positions of the hand of the worker WK, the nut, the socket, the impact wrench, and the like are likely to change due to the nature of the operation. On the other hand, during the period of the tightening step, the position of the impact wrench is unlikely to change due to the nature of the operation. Thus, the first model MD1 identifies the chronological relationship of the operations by the worker WK based on the positional relationship of the objects and the positional changes of the objects between frames of the images IM1 to IM3, and thereby identifies the tightening operation by the worker WK from the nature characteristic to the tightening operation. Finally, the first model MD1 extracts a time corresponding to the identified tightening operation from the total time during which an object related to the tightening work is detected, and thereby identifies the first time. Accordingly, the first model MD1 can identify the first time with high precision.

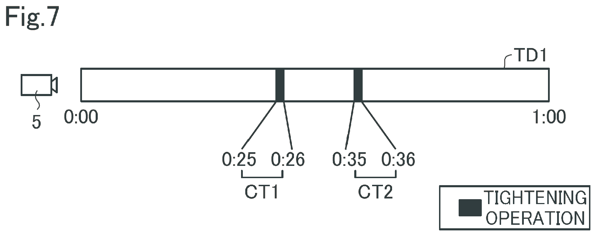

Fig. 7 is a schematic diagram illustrating first time CT1, CT2 identified from the first time-series data TD1. Fig. 7 illustrates a case in which the tightening operation is performed twice in the tightening step under a circumstance where, for example, two tightening points are present when one component PT is tightened to one target object TG. In the example illustrated in Fig. 7, on the first time axis, a period from "0:25", which is a time 25 seconds after a start time of the first time-series data TD1, to "0:26", which is a time 26 seconds after the start time, corresponds to an execution period of a first tightening operation in the tightening step. Therefore, "0:25", which is the start time of the first tightening operation, and "0:26", which is the end time of the first tightening operation, are identified as the first time CT1 related to the first tightening operation. Further, on the first time axis, a period from "0:35", which is a time 35 seconds after the start time of the first time-series data TD1, to "0:36", which is a time 36 seconds after the start time, corresponds to an execution period of a second tightening operation in the tightening step. Therefore, "0:35", which is the start time of the second tightening operation, and "0:36", which is the end time of the second tightening operation, are identified as the first time CT2 related to the second tightening operation.

As illustrated in Fig. 2, in the second identification step of Step S4, the second identification unit 114 identifies the second time.

For example, as illustrated in Fig. 5, when the second time-series data TD2 is acquired from each of the pressure sensor 61, the microphone 62, and the acceleration sensor 63 included in the glove sensor 6, the second identification unit 114 operates as follows. The second identification unit 114 identifies the second time in the second time-series data TD2 acquired from the pressure sensor 61, the second time in the second time-series data TD2 acquired from the microphone 62, and the second time in the second time-series data TD2 acquired from the acceleration sensor 63. At this time, in this embodiment, a period in which the impact wrench rotationally operates corresponds to the execution period of the tightening operation. The execution period of the tightening operation is represented by second time GT1, GT2 representing a start time and the second time GT1, GT2 representing an end time. In the second time-series data TD2 acquired from the pressure sensor 61 and the microphone 62, the impact wrench rotationally operates when the amplitudes largely change at the third time. In the second time-series data TD2 acquired from the acceleration sensor 63, the impact wrench rotationally operates when the amplitude once largely changes. Thus, the second identification unit 114 identifies, as the second time GT1, GT2, a start time and an end time of a period during which the amplitude largely changes at the third time in the second time-series data TD2 acquired from the pressure sensor 61. The second identification unit 114 identifies, as the second time GT1, GT2, a start time and an end time of a period during which the amplitude largely changes at the third time in the second time-series data TD2 acquired from the microphone 62. The second identification unit 114 identifies, as the second time GT1, GT2, a start time and an end time of a period during which the amplitude once largely changes in the second time-series data TD2 acquired from the acceleration sensor 63. Note that when the tightening operation is performed two or more times in the tightening step, the second identification unit 114 repeatedly performs such an identification operation of the second time GT1, GT2 for the number of times of the tightening operation.

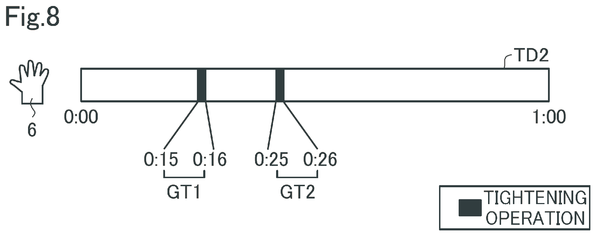

Fig. 8 is a schematic diagram illustrating the second time GT1, GT2 identified from the second time-series data TD2. Fig. 8 illustrates a case in which the tightening operation is performed twice in the tightening step similarly to Fig. 7. In the example illustrated in Fig. 8, on the second time axis, a period from "0:15", which is a time 15 seconds after a start time of the second time-series data TD2, to "0:16", which is a time 16 seconds after the start time, corresponds to an execution period of a first tightening operation in the tightening step. Therefore, "0:15", which is the start time of the first tightening operation, and "0:16", which is the end time of the first tightening operation, are identified as the second time GT1 related to the first tightening operation. Further, on the second time axis, a period from "0:25", which is a time 25 seconds after the start time of the second time-series data TD2, to "0:26", which is a time 26 seconds after the start time, corresponds to an execution period of a second tightening operation in the tightening step. Therefore, "0:25", which is the start time of the second tightening operation, and "0:26", which is the end time of the second tightening operation, are identified as the second time GT2 related to the second tightening operation.

As illustrated in Fig. 2, in a synchronization step of Step S5, the synchronization unit 115 makes the first time CT1, CT2 and the second time GT1, GT2 correspond to each other, and thereby time-synchronizes the first time-series data TD1 and the second time-series data TD2.

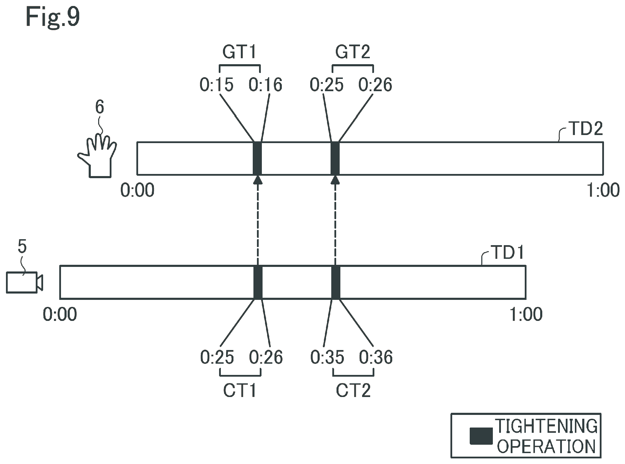

Fig. 9 is a diagram illustrating a specific example of a time synchronization method. Fig. 9 illustrates a case in which the first time-series data TD1 illustrated in Fig. 7 and the second time-series data TD2 illustrated in Fig. 8 are time-synchronized. Each of the camera 5 and the glove sensor 6 has a unique time axis. Therefore, times on the respective time axes at which the specific operation is performed may differ between the first time-series data TD1 and the second time-series data TD2. In the example illustrated in Fig. 9, the first time axis and the second time axis are shifted by 10 seconds. Thus, the synchronization unit 115 shifts one of the time axes of the first time-series data TD1 and the second time-series data TD2 by 10 seconds so that the time axes of the first time-series data TD1 and the second time-series data TD2 match. Then, the synchronization unit 115 makes the first time CT1 and the second time GT1 related to the first tightening operation correspond to each other and makes the first time CT2 and the second time GT2 related to the second tightening operation correspond to each other. Accordingly, the synchronization unit 115 time-synchronizes the first time-series data TD1 and the second time-series data TD2. In this way, when the specific operation is executed a plurality of times in one step, the synchronization unit 115 makes the times CT1, CT2, GT1, GT2 of the same order in a plurality of times of specific operations correspond to each other, and thereby time-synchronizes the first time-series data TD1 and the second time-series data TD2.

Note that in Fig. 2 the first acquisition step is executed before the second acquisition step, and the first identification step is executed before the second identification step, but execution timings of the steps are not limited thereto. Either one of the first acquisition step and the second acquisition step may be executed first, or they may be executed in parallel. Either one of the first identification step and the second identification step may be executed first, or they may be executed in parallel.

According to the first embodiment described above, the work assist system 1 makes the first time CT1, CT2 and the second time GT1, GT2 correspond to each other, and thereby can time-synchronize the first time-series data TD1 and the second time-series data TD2. That is, the work assist system 1 makes the time axes of the time-series data TD1 and the time-series data TD2 correspond to each other based on the times CT1, CT2, GT1, GT2 at which the specific operation is performed, and thereby can time-synchronize the first time-series data TD1 and the second time-series data TD2. In such a mode, in an annotation work of attaching a correct label corresponding to the type of operation to each time-series data TD1, TD2, the correct label can be given to a more accurate time of the time-series data TD1, TD2. Therefore, the work assist system 1 can improve work recognition precision. As a result of an improvement in work recognition precision, whether work is being performed following a predetermined procedure can be appropriately evaluated, and the worker WK can be provided with an appropriate instruction in accordance with a content and progress of the work and characteristics of the worker WK. Accordingly, the work assist system 1 can assist in management of a work situation and proficiency acquisition of the worker WK.

Further, according to the first embodiment described above, the work assist system 1 can mechanically and automatically time-synchronize the first time-series data TD1 and the second time-series data TD2. In such a mode, human-induced man-hours in the time synchronization work of time-synchronizing the first time-series data TD1 and the second time-series data TD2 can be reduced.

Further, according to the first embodiment described above, when the time synchronization is not easily performed using a work start time and a work end time because the second time-series data TD2 has a waveform from which identifying the work start time and the work end time is difficult, the work assist system 1 can operate as follows. The work assist system 1 identifies the second time GT1, GT2 based on a characteristic change in physical quantities in the second time-series data TD2 and makes the second time GT1, GT2 correspond to the first time CT1, CT2, and thereby can easily time-synchronize the first time-series data TD1 and the second time-series data TD2.

Further, according to the first embodiment described above, the work assist system 1 inputs the first time-series data TD1 into the first model MD1 to cause the first mode MD1 to output the first time CT1, CT2, and thereby can identify the first time CT1, CT2. The work assist system 1 inputs the second time-series data TD2 into the second model MD2 to cause the second model MD2 to output the second time GT1, GT2, and thereby can identify the second time GT1, GT2. In such a mode, the work assist system 1 can utilize the machine learning models MD1 and MD2 corresponding to the first time-series data TD1 and the second time-series data TD2 to easily identify the times CT1, CT2, GT1, GT2 at which the specific operation is performed in the time-series data TD1 and TD2. Accordingly, human-induced man-hours in the time synchronization work can be further reduced.

Further, according to the first embodiment described above, the first model MD1 estimates the type of the operation of the worker WK in each period in the input first time-series data TD1 and identifies the period in which the specific operation is performed in the first time-series data TD1, and thereby can output the first time CT1, CT2. The second model MD2 estimates the type of the operation of the worker WK in each period in the input second time-series data TD2 and identifies the period in which the specific operation is performed in the second time-series data TD2, and thereby can output the second time GT1, GT2. In such a mode, the work assist system 1 can mechanically and automatically identify the first time CT1, CT2 and the second time GT1, GT2 from the estimation results of the type of the operation by the worker WK using the machine learning.

Further, according to the first embodiment described above, the work assist system 1 can acquire the first time-series data TD1 from the fixed-point camera 51 without having the worker WK wear the wearable camera 52. In such a mode, the worker WK can have a reduced load. Further, in such a mode, the work assist system 1 can objectively capture motion of the entire body of the worker WK by utilizing the position, posture, and the like of the worker WK acquired by the fixed-point camera 51.

Further, according to the first embodiment described above, the work assist system 1 can acquire the first time-series data TD1 from the wearable camera 52. In such a mode, the work assist system 1 can capture detailed motion of the worker WK, such as hand motion, at the work target point. Accordingly, the work assist system 1 can more accurately identify the first time CT1, CT2. Therefore, the work assist system 1 can time-synchronize the first time-series data TD1 and the second time-series data TD2 with high precision.

Further, according to the first embodiment described above, the glove sensor 6 may include the pressure sensor 61. In such a mode, the work assist system 1 detects a characteristic change in pressure for each operation, such as gripping, grabbing, and pressing, from the second time-series data TD2 acquired from the pressure sensor 61, and thereby can identify the second time GT1, GT2.

Further, according to the first embodiment described above, the glove sensor 6 may include the microphone 62. In such a mode, the work assist system 1 detects a characteristic sound for each operation, such as an operating sound of the tool TL and a fitting sound of the component PT, from the second time-series data TD2 acquired from the microphone 62, and thereby can identify the second time GT1, GT2.

Further, according to the first embodiment described above, the glove sensor 6 may include the acceleration sensor 63 and the gyro sensor 64. In such a mode, the work assist system 1 detects a characteristic change in inertial force, such as a change in vibration applied to the hand of the worker WK, from the second time-series data TD2 acquired from the acceleration sensor 63 and the gyro sensor 64, and thereby can identify the second time GT1, GT2.

Further, according to the first embodiment described above, the glove sensor 6 may include the IMU including the acceleration sensor 63, the gyro sensor 64, and the geomagnetic sensor. That is, the glove sensor 6 may further include the geomagnetic sensor. In such a mode, the work assist system 1 detects a change in a position and posture of the hand of the worker WK from the second time-series data TD2 acquired from the IMU, and thereby can identify the second time GT1, GT2.

Further, according to the first embodiment described above, the glove sensor 6 may include the bend sensor. In such a mode, the work assist system 1 detects a change in a degree of a bend of the finger or the wrist of the worker WK from the second time-series data TD2 acquired from the bend sensor, and thereby can identify the second time GT1, GT2.

Further, according to the first embodiment described above, the glove sensor 6 may include the vibration sensor. In such a mode, the work assist system 1 detects a change in vibration applied to the hand of the worker WK from the second time-series data TD2 acquired from the vibration sensor, and thereby can identify the second time GT1, GT2.

Further, according to the first embodiment described above, the glove sensor 6 may include the vital sensor. In such a mode, the work assist system 1 detects a change in vital signs of the worker WK from the second time-series data TD2 acquired from the vital sensor, and thereby can identify the second time GT1, GT2.

Further, according to the first embodiment described above, the glove sensor 6 may include the area sensor. In such a mode, the work assist system 1 detects entry into and exit from a specific area in the work place WS from the second time-series data TD2 acquired from the area sensor, and thereby can identify the second time GT1, GT2.

Further, according to the first embodiment described above, the specific operation, which is the identification target of the first time CT1, CT2 and the second time GT1, GT2, is the tightening operation. In the tightening operation, characteristic changes in physical quantities are seen in the second time-series data TD2 acquired from each of the pressure sensor 61 attached to the middle finger of the worker WK, the microphone 62 attached to the hand of the worker WK, and the acceleration sensor 63 attached to the hand of the worker WK. In such a mode, the work assist system 1 detects a change in pressure characteristic to the tightening operation from the second time-series data TD2 acquired from the pressure sensor 61 attached to the middle finger of the worker WK, and thereby can identify the second time GT1, GT2. Further, the work assist system 1 detects a sound characteristic to the tightening operation from the second time-series data TD2 acquired from the microphone 62 attached to the hand of the worker WK, and thereby can identify the second time GT1, GT2. Furthermore, the work assist system 1 detects a change in inertial force characteristic to the tightening operation from the second time-series data TD2 acquired from the acceleration sensor 63 attached to the hand of the worker WK, and thereby can identify the second time GT1, GT2.

Note that, according to the first embodiment described above, the specific operation, which is the identification target of the first time CT1, CT2 and the second time GT1, GT2, may be, for example, at least any one of the tightening operation, the taking-out operation, the fitting operation, and the insertion operation. In such a mode, the work assist system 1 makes the times CT1, CT2, GT1, GT2 at which at least any one of the tightening operation, the taking-out operation, the fitting operation, and the insertion operation is performed correspond to each other, and thereby can time-synchronize the time-series data TD1 and TD2.

### B. Second Embodiment:

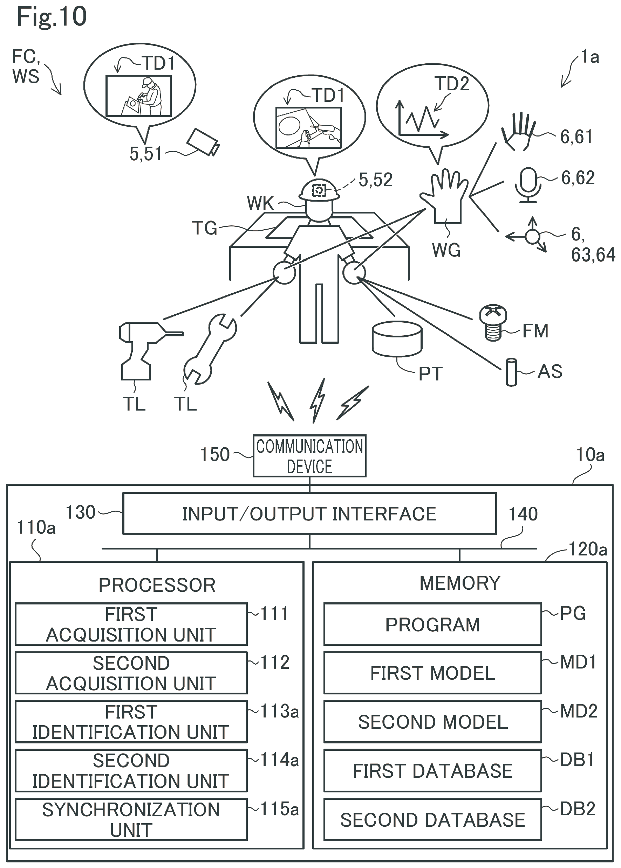

Fig. 10 is an explanatory diagram illustrating a schematic configuration of a work assist system 1a according to a second embodiment. In this embodiment, the work assist system 1a selects the specific operation for which the first time-series data TD1 and the second time-series data TD2 are time-synchronized, in accordance with confidence of the type of the operation estimated by using the machine learning model MD1, MD2. Then, the work assist system 1a makes the first time CT1, CT2 and the second time GT1, GT2 for the selected specific operation correspond to each other, and thereby time-synchronizes the first time-series data TD1 and the second time-series data TD2. The confidence is, for example, accuracy in estimation of the type of the operation by using the machine learning model MD1, MD2. The confidence may be precision in estimation of the type of the operation by using the machine learning model MD1, MD2. The confidence may be recall in estimation of the type of the operation by using the machine learning model MD1, MD2. The confidence may be an F-measure in estimation of the type of the operation by using the machine learning model MD1, MD2. The confidence is calculated inside or outside the work assist system 1a, and is stored in advance in a memory 120a of a work assist device 10a. The other configurations are the same as those of the first embodiment unless otherwise specified. The same configurations as those in the first embodiment are denoted by the same reference characters, and description thereof is omitted.

The work assist system 1a includes one or more cameras 5, one or more glove sensors 6, and the work assist device 10a.

The work assist device 10a includes a computer including a processor 110a, the memory 120a, the input/output interface 130, the internal bus 140, and the communication device 150. The memory 120a further stores at least one of a first database DB1 and a second database DB2. The first database DB1 is a database indicating confidence of the type of the operation estimated by using the first model MD1 for each of a plurality of different operations. The second database DB2 is a database indicating confidence of the type of the operation estimated by using the second model MD2 for each of a plurality of different operations. The processor 110a executes the program PG stored in the memory 120a, thus implementing various functions including functions as the first acquisition unit 111, the second acquisition unit 112, a first identification unit 113a, a second identification unit 114a, and a synchronization unit 115a.

The first identification unit 113a identifies the first time CT1, CT2 for each of a plurality of specific operations of the same type or different types. For example, the first identification unit 113a identifies the first time CT1, CT2 for each of a first specific operation and a second specific operation that is of the same type as the first specific operation and performed closest in time to the first specific operation. The first identification unit 113a may identify the first time CT1, CT2 for each of a plurality of specific operations including the first specific operation and the second specific operation that is of a type different from the first specific operation and has the highest confidence next to the first specific operation. At this time, the first identification unit 113a may identify the first time CT1, CT2 in order from the operation having higher confidence.

The second identification unit 114a identifies the second time GT1, GT2 for each of a plurality of specific operations of the same type or different types. For example, the second identification unit 114a identifies the second time GT1, GT2 for each of the first specific operation and the second specific operation that is of the same type as the first specific operation and performed closest in time to the first specific operation. The second identification unit 114a may identify the second time GT1, GT2 for each of a plurality of specific operations including the first specific operation and the second specific operation that is of a type different from the first specific operation and has the highest confidence next to the first specific operation. At this time, the second identification unit 114a may identify the second time GT1, GT2 in order from the operation having higher confidence. Note that the types of the plurality of specific operations, which are the identification targets of the first time CT1, CT2 and the second time GT1, GT2, are the same between the first identification unit 113a and the second identification unit 114a.

The synchronization unit 115a compares, between the first time-series data TD1 and the second time-series data TD2, the types of two specific operations and time widths between the two specific operations in order from the operation having higher confidence, among the plurality of specific operations for which the times CT1, CT2, GT1, GT2 are identified. The time width between the two operations corresponds to a time interval from the first specific operation to the second specific operation. For example, the time width between the two operations may be a time width from a start time of the first specific operation to a start time of the second specific operation, or may be a time width from an end time of the first specific operation to the start time of the second specific operation. Then, the synchronization unit 115a makes the first time CT1, CT2 and the second time GT1, GT2 correspond to each other for the two specific operations with the highest and second highest confidence among a plurality of specific operations for which both of the types of the operations and the time widths between the operations are consistent. Accordingly, the synchronization unit 115a time-synchronizes the first time-series data TD1 and the second time-series data TD2.

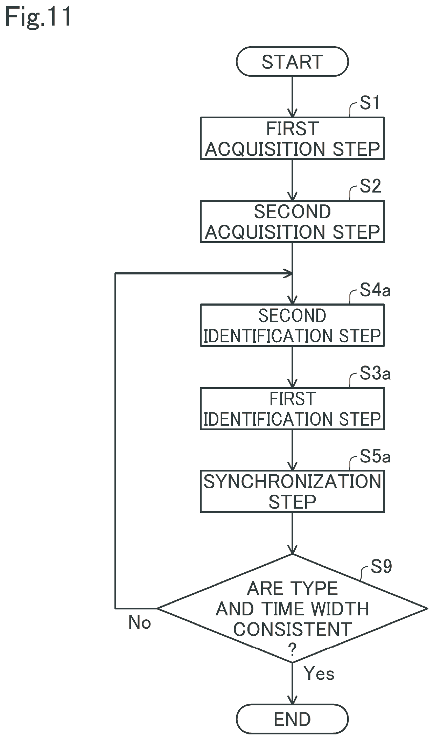

Fig. 11 is a flowchart illustrating a work assist method according to the second embodiment. For example, the flow illustrated in Fig. 11 is executed after completion of work by the worker WK. Note that the first acquisition step and the second acquisition step are similar to those in the first embodiment.

In the second identification step of Step S4a, the second identification unit 114a identifies the second time GT1, GT2 for each of a plurality of specific operations of the same type or different types. Specifically, when the second identification step is executed for the first time with respect to the second time-series data TD2, the second identification unit 114a operates as follows. The second identification unit 114a identifies the second time GT1, GT2 for the first specific operation with the highest confidence. Then, when the second specific operation of the same type as the first specific operation is included in the second time-series data TD2, the second identification unit 114a identifies the second time GT1, GT2 for the second specific operation that is of the same type as the first specific operation and is performed closest in time to the first specific operation. When the second specific operation of the same type as the first specific operation is not included in the second time-series data TD2, the second identification unit 114a identifies the second time GT1, GT2 for the second specific operation that is of a type different from the first specific operation and has the highest confidence next to the first specific operation.

In the first identification step of Step S3a, the first identification unit 113a identifies the first time CT1, CT2 for each of the plurality of specific operations the same as the specific operations for which the second time GT1, GT2 is identified by the second identification unit 114a. Specifically, when the first identification step is executed for the first time with respect to first time-series data TD1, the first identification unit 113a operates as follows. The first identification unit 113a identifies the first time CT1, CT2 for the first specific operation with the highest confidence. Then, when the second specific operation of the same type as the first specific operation is included in the first time-series data TD1, the first identification unit 113a identifies the first time CT1, CT2 for the second specific operation that is of the same type as the first specific operation and is performed closest in time to the first specific operation. When the second specific operation of the same type as the first specific operation is not included in the first time-series data TD1, the first identification unit 113a identifies the first time CT1, CT2 for the second specific operation that is of a type different from the first specific operation and has the highest confidence next to the first specific operation.

In the synchronization step of Step S5a, the synchronization unit 115a first compares, between the first time-series data TD1 and the second time-series data TD2, the types of the two specific operations for which the times CT1, CT2, GT1, GT2 are identified and the time widths between the two specific operations. Then, if both of the types of the two specific operations and the time widths between the two specific operations are consistent between the first time-series data TD1 and the second time-series data TD2 (Step S9: Yes), the synchronization unit 115a operates as follows. In this case, the synchronization unit 115a makes the first time CT1, CT2 and the second time GT1, GT2 for these two specific operations correspond to each other, and thereby time-synchronizes the first time-series data TD1 and the second time-series data TD2. On the other hand, if at least one of the types of the two specific operations and the time widths between the two specific operations is not consistent between the first time-series data TD1 and the second time-series data TD2 (Step S9: No), the synchronization unit 115a operates as follows. In this case, the synchronization unit 115a does not make the first time CT1, CT2 and the second time GT1, GT2 for these two specific operations correspond to each other, and returns the processing to the second identification step.

When the second identification step is executed for the second time and thereafter with respect to the second time-series data TD2, the second identification unit 114a operates as follows. The second identification unit 114a sets, as a new first specific operation, an operation with the highest confidence next to the specific operation for which at least one of the types of the operations and the time widths between the operations is not consistent in the previous processing, and identifies the second time GT1, GT2 for each of the plurality of specific operations.

When the first identification step is executed for the second time and thereafter with respect to first time-series data TD1, the first identification unit 113a identifies the first time CT1, CT2 for each of the plurality of specific operations the same as those for which the second time GT1, GT2 is newly identified by the second identification unit 114a. Thereby, the first identification unit 113a sets, as a new first specific operation, the operation with the highest confidence next to the specific operation for which at least one of the types of the operations and the time widths between the operations is not consistent in the previous process, and identifies the first time CT1, CT2 for each of the plurality of specific operations.

The synchronization unit 115a compares, between the first time-series data TD1 and the second time-series data TD2, the types of the two specific operations for which the times CT1, CT2, GT1, GT2 are newly identified and the time widths between the two specific operations. Then, the second identification step, the first identification step, and the synchronization step are repeatedly executed until the types of the two specific operations and the time widths between the two specific operations become consistent.

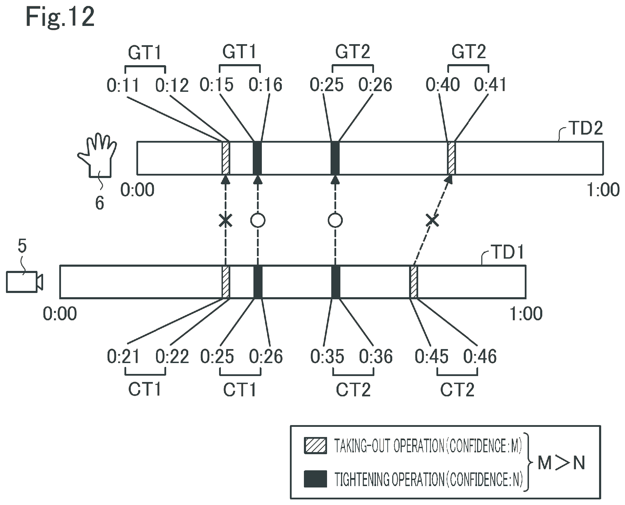

Fig. 12 is a diagram illustrating a specific example of a time synchronization method in accordance with confidence. Fig. 12 illustrates a case in which the plurality of specific operations, which are the identification targets of the first time CT1, CT2 and the second time GT1, GT2, are the tightening operation and the taking-out operation. Below, with reference to Fig. 12, a case in which confidence of the taking-out operation is higher than confidence of the tightening operation will be described as an example. In the example illustrated in Fig. 12, although the taking-out operation has higher confidence than the tightening operation, time widths between a first taking-out operation and a second taking-out operation are not consistent. Thus, the synchronization unit 115a does not make the first time CT1, CT2 and the second time GT1, GT2 for these two taking-out operations correspond to each other, but compares, for the tightening operation with the next highest confidence, the types of two specific operations and the time widths between the two specific operations. In the example illustrated in Fig. 12, the types of the operations of the first tightening operation and the second tightening operation are consistent, and the time widths between the first tightening operation and the second tightening operation are also consistent. Thus, the synchronization unit 115a makes the first time CT1, CT2 and the second time GT1, GT2 for these two tightening operations correspond to each other, and thereby time-synchronizes the first time-series data TD1 and the second time-series data TD2.

According to the second embodiment described above, the work assist system 1a makes the first time CT1, CT2 and the second time GT1, GT2 for two specific operations with the highest and second highest confidence correspond to each other, and thereby can time-synchronize the time-series data TD1 and TD2. In this mode, the work assist system 1a can time-synchronize the first time-series data TD1 and the second time-series data TD2 with high precision.

Note that the work assist system 1a may make the first time CT1, CT2 and the second time GT1, GT2 correspond to each other for a predetermined number of specific operations in order from the operation having higher confidence without limiting to the two specific operations with the highest and second highest confidence, and thereby time-synchronize the time-series data TD1 and TD2. That is, the number of combinations of the first time CT1, CT2 and the second time GT1, GT2 that are made to correspond to each other for time synchronization of the time-series data TD1 and TD2 may be one or three or more.

Further, according to the second embodiment described above, the work assist system 1a makes the first time CT1, CT2 and the second time GT1, GT2 correspond to each other for two specific operations for which the types of the operations and the time widths between the operations are consistent, and thereby can time-synchronize the time-series data TD1 and TD2. In this mode, the work assist system 1a can time-synchronize the first time-series data TD1 and the second time-series data TD2 with high precision.

Note that an amount of information for estimation of the type of the operation may differ between the first time-series data TD1 and the second time-series data TD2. This difference in information amount may cause a difference in difficulty in estimating the type of the operation. For example, in the first time-series data TD1, not only the motion of the entire body of the worker WK and the detailed motion of each part of the worker WK, but also various objects, such as an object held in the hand of the worker WK, can be detected. Therefore, the first time-series data TD1 can estimate the type of the operation independently without combination with other time-series data. On the other hand, in the second time-series data TD2, when there is no change seen in physical quantities, a change in the operation of the worker WK may be uncapturable. Therefore, the second time-series data TD2 may have difficulty in estimating the type of the operation independently without combination with other time-series data. Here, when ranking of magnitudes of confidence for the respective operations differs between the first model MD1 and the second model MD2, it is necessary to prioritize the confidence for the machine learning model MD1 or MD2 in accordance with a degree of difficulty in estimating the type of the operation. Therefore, when the ranking of magnitudes of confidence for the respective operations differs between the first model MD1 and the second model MD2, for example, the synchronization unit 115a operates as follows. The synchronization unit 115a prioritizes the confidence for the second model MD2 into which the second time-series data TD2 having higher difficulty in estimating the type of the operation, that is, a smaller amount of information for estimating the type of the operation is input, between the first time-series data TD1 and the second time-series data TD2. That is, the synchronization unit 115a makes the first time CT1, CT2 and the second time GT1, GT2 for the two specific operations with the highest and second highest confidence shown in the second database DB2 correspond to each other among a plurality of specific operations for which the types of the operations and the time widths between the operations are consistent. In such a mode, the work assist system 1a can time-synchronize the first time-series data TD1 and the second time-series data TD2 with high precision even with a limited amount of information.

Note that when the glove sensor 6 includes a plurality of different types of sensors, such as the pressure sensor 61, the microphone 62, the acceleration sensor 63, and the gyro sensor 64 and thus can acquire a plurality of pieces of second time-series data TD2, the synchronization unit 115a may operate as follows. In this case, the synchronization unit 115a may prioritize confidence when the type of the operation is estimated based on the second time-series data TD2 acquired from the microphone 62 or the acceleration sensor 63.

### C. Third Embodiment:

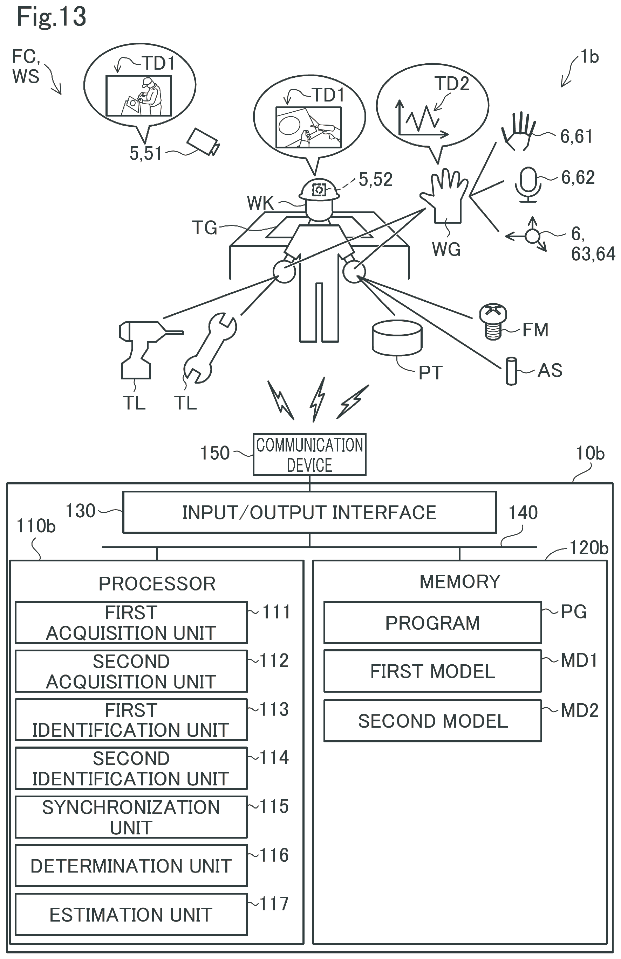

Fig. 13 is an explanatory diagram illustrating a schematic configuration of a work assist system 1b according to a third embodiment. In the first time-series data TD1, every time arrangement of the objects AS, FM, PT, TG, TL, WG, and WK in the work place WS changes in accordance with the operation of the worker WK, appearance of the work place WS shown in the image included in the first time-series data TD1 changes. Therefore, in the first time-series data TD1, capturing a change in the operation of the worker WK tends to be easy. This may facilitate determination of the work start time and the work end time based on the first time-series data TD1. On the other hand, in the second time-series data TD2, even when the arrangement of the objects AS, FM, PT, TG, TL, WG, and WK in the work place WS changes in accordance with the operation of the worker WK, there may be no change seen in physical quantities of a detection target. When there is no change seen in the physical quantities of the detection target, a change in the operation of the worker WK may be uncapturable. Therefore, when there is no change seen in the physical quantities of the detection target in accordance with the operation of the worker WK performed at the work start time and the work end time, it may be difficult to determine the work start time and the work end time based on the second time-series data TD2. Therefore, in this embodiment, the work assist system 1b operates as follows by utilizing the time synchronization between the first time-series data TD1 and the second time-series data TD2. The work assist system 1b estimates, based on the first time-series data TD1 for which determination of the work start time and the work end time is easy, the work start time and the work end time in the second time-series data TD2 for which determination of the work start time and the work end time is difficult, and thereby further assists in work. The other configurations are the same as those of the first embodiment unless otherwise specified. The same configurations as those in the first embodiment are denoted by the same reference characters, and description thereof is omitted.

The work assist system 1b includes one or more cameras 5, one or more glove sensors 6, and a work assist device 10b.

The work assist device 10b includes a computer including a processor 110b, a memory 120b, the input/output interface 130, the internal bus 140, and the communication device 150. The processor 110b executes the program PG stored in the memory 120b, thus implementing various functions including functions as the first acquisition unit 111, the second acquisition unit 112, the first identification unit 113, the second identification unit 114, the synchronization unit 115, a determination unit 116, and an estimation unit 117.

The determination unit 116 determines, as the work start time, a time at which a predetermined start operation is performed in the first time-series data TD1. The determination unit 116 determines, as the work end time, a time at which a predetermined end operation is performed in the first time-series data TD1. For example, the determination unit 116 receives an input from a user of the work assist system 1, such as the worker WK who actually performs work or a manager who manages a work situation, and thereby determines the work start time and the work end time in the first time-series data TD1. The determination unit 116 may input the first time-series data TD1 into a trained machine learning model (not illustrated) and causes the trained machine learning model to output the work start time and the work end time, and thereby determine the work start time and the work end time in the first time-series data TD1. That is, the work assist system 1 may determine the work start time and the work end time in the first time-series data TD1 manually by a person, or may determine the work start time and the work end time in the first time-series data TD1 mechanically and automatically by utilizing artificial intelligence or the like.

The estimation unit 117 estimates the work start time and the work end time in the second time-series data TD2 from the work start time and the work end time which are determined in the first time-series data TD1. For example, the estimation unit 117 compares and collates the time-synchronized first time-series data TD1 and second time-series data TD2. Accordingly, the estimation unit 117 identifies, in the second time-series data TD2, times corresponding to the work start time and the work end time which are determined in the first time-series data TD1, and thereby estimates the work start time and the work end time in the second time-series data TD2.

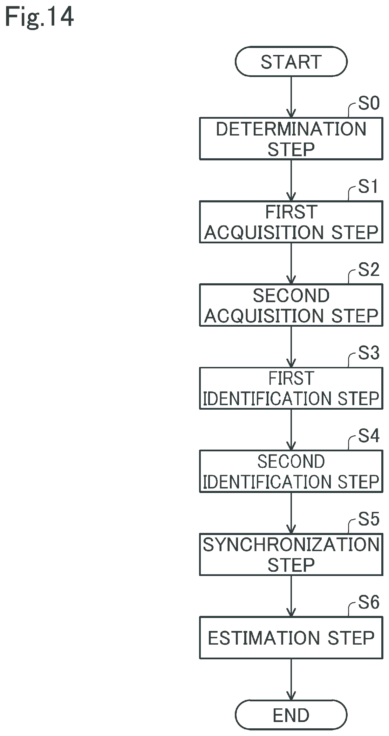

Fig. 14 is a flowchart illustrating a work assist method according to the third embodiment. For example, the flow illustrated in Fig. 14 is executed after completion of work by the worker WK.

In a determination step of Step S0, the determination unit 116 determines, as the work start time, the time at which the predetermined start operation is performed in the first time-series data TD1, and determines, as the work end time, the time at which the predetermined end operation is performed in the first time-series data TD1.

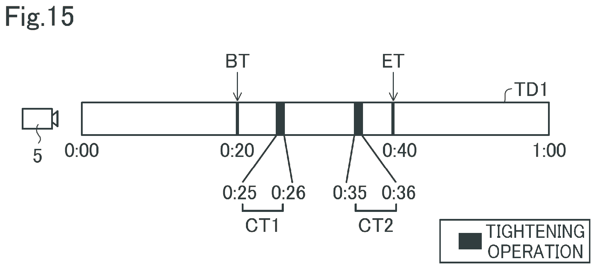

Fig. 15 is a diagram illustrating a specific example of a method for determining a work start time BT and a work end time ET. Fig. 15 illustrates a case in which the work start time BT and the work end time ET in the first time-series data TD1 illustrated in Fig. 7 are determined. The start operation is, for example, the taking-out operation of taking out the speaker from the predetermined storage place. The end operation is, for example, the returning operation of returning the impact wrench to its original storage place. In the example illustrated in Fig. 15, "0:20", which is the time at which the start operation is performed, is determined as the work start time BT, and "0:40", which is the time at which the end operation is performed, is determined as the work end time ET.

After the determination step, each step from the first acquisition step to the synchronization step is executed. The processing content in each step from the first acquisition step to the synchronization step is similar to that in the first embodiment. After the end of all the steps from the determination step to the synchronization step, an estimation step is executed.

As illustrated in Fig. 14, in the estimation step of Step S6, the estimation unit 117 estimates the work start time BT and the work end time ET in the second time-series data TD2 from the work start time BT and the work end time ET which are determined in the first time-series data TD1.

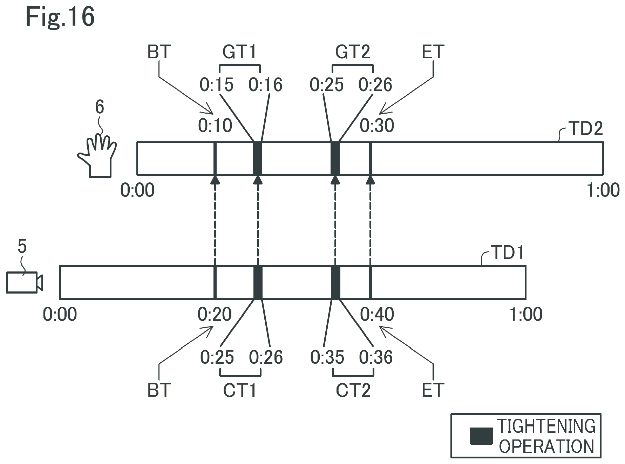

Fig. 16 is a diagram illustrating a specific example of a method for estimating the work start time BT and the work end time ET. Fig. 16 illustrates a case in which the work start time BT and the work end time ET in the second time-series data TD2 illustrated in Fig. 8 are estimated from the first time-series data TD1 illustrated in Fig. 15. The first time-series data TD1 and the second time-series data TD2 are time-synchronized in advance. The first time axis and the second time axis are shifted by 10 seconds. Thereby, in the example illustrated in Fig. 16, a time in the second time-series data TD2 corresponding to "0:20" that is the work start time BT in the first time-series data TD1 is "0:10". Therefore, the estimation unit 117 estimates that the time "0:10" in the second time-series data TD2 is the work start time BT in the second time-series data TD2. Further, in the example illustrated in Fig. 16, a time in the second time-series data TD2 corresponding to "0:40" that is the work end time ET in the first time-series data TD1 is "0:30". Therefore, the estimation unit 117 estimates that the time "0:30" in the second time-series data TD2 is the work end time ET in the second time-series data TD2.

Note that in Fig. 14 the determination step is executed before the first acquisition step, but an execution timing of the determination step is not limited thereto. The determination step is executed at least before the estimation step, and may be executed at any timing from the first acquisition step to the synchronization step.

According to the third embodiment described above, the work assist system 1b compares and collates the time-synchronized first time-series data TD1 and second time-series data TD2. Thereby, the work assist system 1b can estimate the work start time BT and the work end time ET in the second time-series data TD2 from the work start time BT and the work end time ET which are determined in the first time-series data TD1. In such a mode, even if the second time-series data TD2 has a waveform from which identifying the work start time BT and the work end time ET is difficult, the work start time BT and the work end time ET in the second time-series data TD2 can be estimated based on the time-synchronized first time-series data TD1.

Further, according to the third embodiment described above, the work assist system 1b can mechanically and automatically estimate the work start time BT and the work end time ET in the second time-series data TD2. In such a mode, human-induced man-hours in the annotation work can be reduced.

Further, according to the third embodiment described above, the work assist system 1b can make the work start time BT and the work end time ET clear in each of the first time-series data TD1 and the second time-series data TD2. Thereby, in the annotation work, correct labels can be attached to even more accurate times of the time-series data TD1, TD2. Accordingly, the work assist system 1 can further improve work recognition precision. Therefore, the work assist system 1 can further assist in management of a work situation and proficiency acquisition of the worker WK.

Further, in the third embodiment described above, the work assist system 1b may acquire the first time-series data TD1 from the wearable camera 52 and estimate the work start time BT and the work end time ET in the second time-series data TD2. In such a mode, the work assist system 1b determines the work start time BT and the work end time ET from the first time-series data TD1 that has captured detailed motion of the worker WK, which can facilitate determination of the work start time BT and the work end time ET in the first time-series data TD1. Therefore, it is possible to reduce a workload required to determine the work start time BT and the work end time ET in the first time-series data TD1 manually by a person. Thus, human-induced man-hours in the annotation work can be further reduced.

### D. Fourth Embodiment:

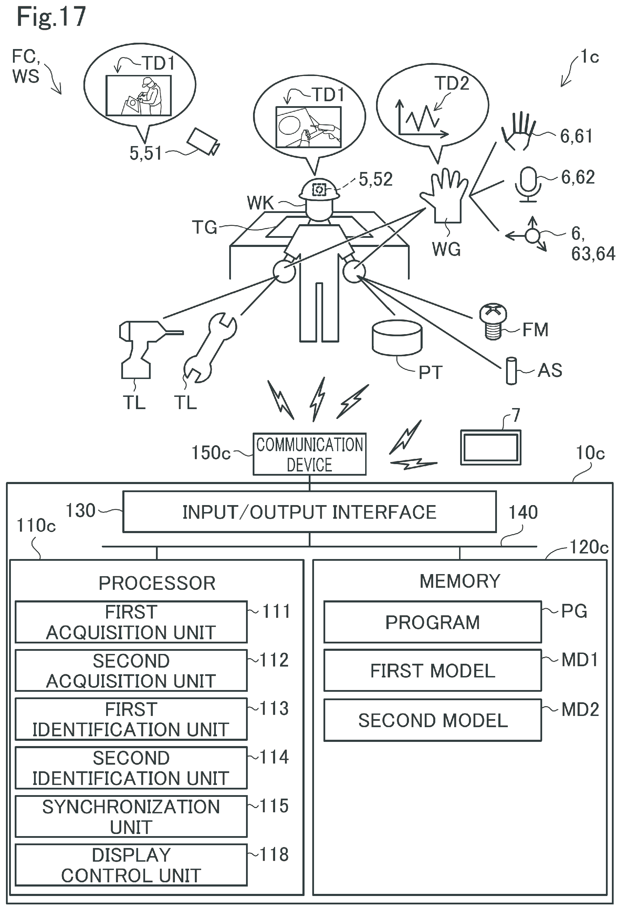

Fig. 17 is an explanatory diagram illustrating a schematic configuration of a work assist system 1c according to a fourth embodiment. In this embodiment, the work assist system 1c presents the time-synchronized first time-series data TD1 and second time-series data TD2 to the worker WK, and thereby further assists in work. The other configurations are the same as those of the first embodiment unless otherwise specified. The same configurations as those in the first embodiment are denoted by the same reference characters, and description thereof is omitted.

The work assist system 1c includes one or more cameras 5, one or more glove sensors 6, a display device 7, and a work assist device 10c.

The display device 7 displays various types of information. For example, the display device 7 may be a display of a portable terminal held by a user, a display installed in advance in the work place WS, or a display of the work assist device 10c. The display device 7 may have an input operation function of receiving an instruction of the user, in addition to a display function of displaying various types of information. In this case, the display device 7 may be a touch panel.

The work assist device 10c includes a computer including a processor 110c, a memory 120c, the input/output interface 130, the internal bus 140, and a communication device 150c. The communication device 150c can communicate with the camera 5, the glove sensor 6, and the display device 7 by wired communication or wireless communication. The processor 110c executes the program PG stored in the memory 120c, thus implementing various functions including functions as the first acquisition unit 111, the second acquisition unit 112, the first identification unit 113, the second identification unit 114, the synchronization unit 115, and a display control unit 118.

The display control unit 118 causes the display device 7 to display the time-synchronized first time-series data TD1 and second time-series data TD2 on the same screen. At this time, the display control unit 118 may cause the display device 7 to display the first time-series data TD1 acquired from only one camera 5. The display control unit 118 may cause the display device 7 to display a plurality of pieces of first time-series data TD1 acquired from a plurality of respective cameras 5. The display control unit 118 may cause the display device 7 to display the first time-series data TD1 acquired from either one of the fixed-point camera 51 and the wearable camera 52. The display control unit 118 may cause the display device 7 to display both the first time-series data TD1 acquired from the fixed-point camera 51 and the first time-series data TD1 acquired from the wearable camera 52. Further, the display control unit 118 may cause the display device 7 to display the second time-series data TD2 acquired from only one sensor included in the glove sensor 6. The display control unit 118 may cause the display device 7 to display a plurality of pieces of second time-series data TD2 acquired from a plurality of respective sensors included in the glove sensor 6. When the display control unit 118 causes the display device 7 to display a plurality of pieces of second time-series data TD2, a plurality of sensors included in the glove sensor 6 may be of the same type or different types.

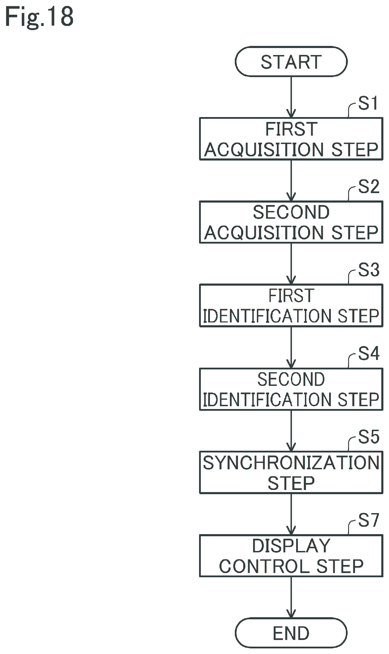

Fig. 18 is a flowchart illustrating a work assist method according to the fourth embodiment. For example, the flow illustrated in Fig. 18 is executed after completion of work by the worker WK. Note that the processing content in each step from the first acquisition step to the synchronization step is similar to that in the first embodiment. After the end of all the steps from the first acquisition step to the synchronization step, a display control step is executed.

In the display control step of Step S7, the display control unit 118 causes the display device 7 to display in parallel the time-synchronized first time-series data TD1 and second time-series data TD2.

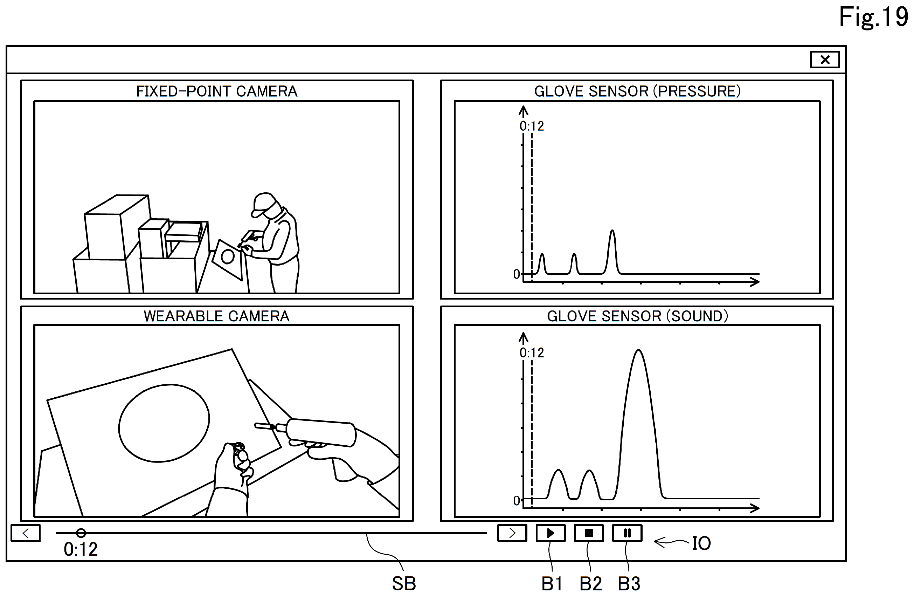

Fig. 19 is a schematic diagram illustrating an example of a screen displayed on the display device 7. In the example illustrated in Fig. 19, the first time-series data TD1 acquired from each of the fixed-point camera 51 and the wearable camera 52 and the second time-series data TD2 acquired from each of the pressure sensor 61 and the microphone 62 at the same time point are displayed on the display device 7. Furthermore, in the example illustrated in Fig. 19, an input operation screen IO for receiving a user's instruction is displayed on the display device 7 together with the first time-series data TD1 and the second time-series data TD2. For example, the input operation screen IO includes a slide bar SB for selecting by a drag operation a time of the time-series data TD1, TD2 to be displayed. The input operation screen IO may include operation buttons, such as a reproduction button B1 for reproducing the time-series data TD1, TD2, a stop button B2 for stopping reproduction of the time-series data TD1, TD2, and a pause button B3 for pausing reproduction of the time-series data TD1, TD2. Further, when a plurality of types of the displayable time-series data TD1, TD2 is present in the first time-series data TD1 and the second time-series data TD2 respectively, the input operation screen IO may include a selection button (not illustrated) for selecting the type of time-series data TD1, TD2 to be displayed on the display device 7.

Note that the configuration of the screen displayed on the display device 7 is not limited to that described above. Other information, such as a work instruction sheet and a work procedure sheet for work corresponding to the time-series data TD1, TD2 that is being displayed, may be displayed on the display device 7.

According to the fourth embodiment described above, the work assist system 1c can cause the display device 7 to display in parallel the first time-series data TD1 and the second time-series data TD2 at the same time point. In such a mode, a manager can efficiently grasp a work situation by checking information displayed on the display device 7. Further, the worker WK can efficiently grasp characteristics or problems of his/her own operation by checking the information displayed on the display device 7. Accordingly, management of a work situation and proficiency acquisition of the worker WK can be more efficiently assisted.

### E. Fifth Embodiment:

This embodiment describes a case in which the specific operation, which is the identification target of the first time CT1, CT2 and the second time GT1, GT2, is the taking-out operation. Basic configurations are the same as those of the first embodiment unless otherwise specified.

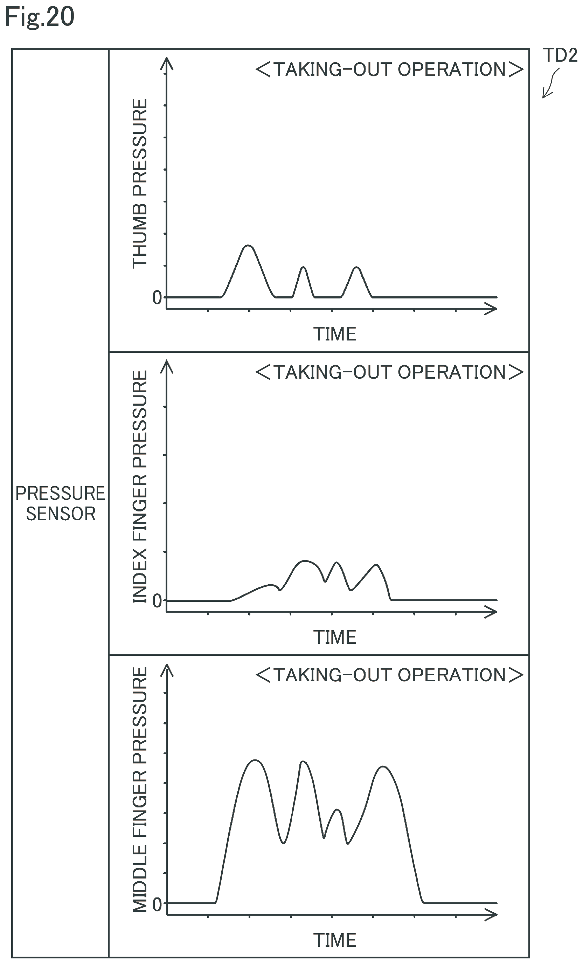

Fig. 20 is a schematic diagram illustrating an example of the second time-series data TD2 acquired from the glove sensor 6 in the taking-out operation. Fig. 20 schematically illustrates the second time-series data TD2 acquired from each of the pressure sensors 61 attached to the thumb, index finger, and middle finger of the worker WK in a period including the taking-out operation. Note that Fig. 20 illustrates changes in physical quantities per taking-out operation.

In the taking-out operation, the worker WK puts force into the thumb, index finger, and middle finger to grab an object such as the tool TL. Therefore, in the second time-series data TD2 acquired from each of the pressure sensors 61 attached to the thumb, index finger, and middle finger of the worker WK, an amplitude largely changes at approximately the same timing.

According to the fifth embodiment described above, the specific operation, which is the identification target of the first time CT1, CT2 and the second time GT1, GT2, is the taking-out operation. In the taking-out operation, a characteristic change in physical quantities is seen in the second time-series data TD2 acquired from each of the pressure sensors 61 attached to the thumb, index finger, and middle finger of the worker WK. In such a mode, the work assist system 1 detects a change in pressure characteristic to the taking-out operation from the second time-series data TD2 acquired from the pressure sensor 61 attached to the thumb of the worker WK, and thereby can identify the second time GT1, GT2. Further, the work assist system 1 detects a change in pressure characteristic to the taking-out operation from the second time-series data TD2 acquired from the pressure sensor 61 attached to the index finger of the worker WK, and thereby can identify the second time GT1, GT2. Furthermore, the work assist system 1 detects a change in pressure characteristic to the taking-out operation from the second time-series data TD2 acquired from the pressure sensor 61 attached to the middle finger of the worker WK, and thereby can identify the second time GT1, GT2.

### F. Sixth Embodiment:

This embodiment describes a case in which the specific operation, which is the identification target of the first time CT1, CT2 and the second time GT1, GT2, is the fitting operation. Basic configurations are the same as those of the first embodiment unless otherwise specified.

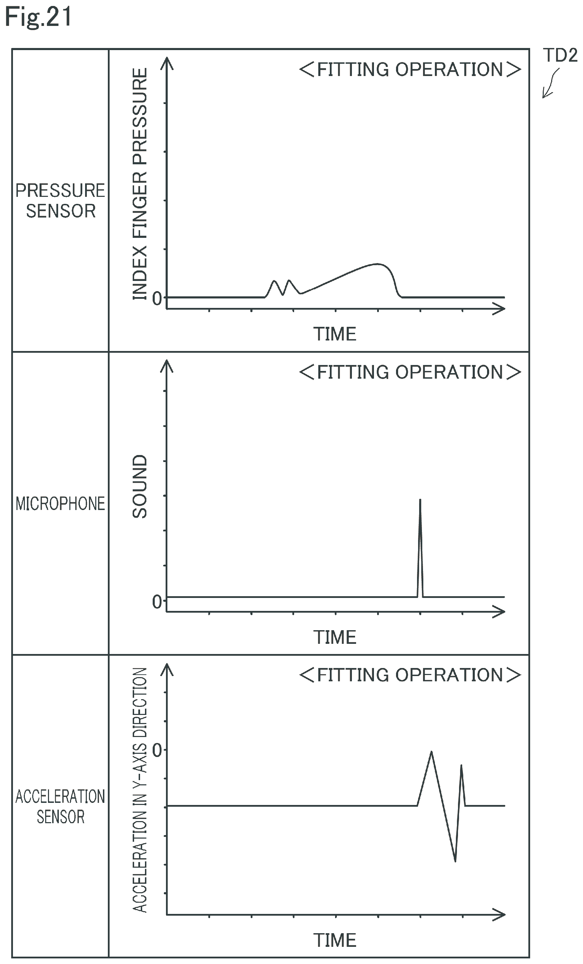

Fig. 21 is a schematic diagram illustrating an example of the second time-series data TD2 acquired from the glove sensor 6 in the fitting operation. Fig. 21 schematically illustrates the second time-series data TD2 acquired from each of the pressure sensors 61 attached to the index finger of the worker WK, the microphone 62 attached to the hand of the worker WK, and the acceleration sensor 63 attached to the hand of the worker WK in a period including the fitting operation. Note that Fig. 21 illustrates changes in physical quantities per fitting operation.

In the fitting operation, the worker WK pushes the component PT with the index finger, and thereby connectors are fitted together and two or more components PT are fitted. Therefore, in the second time-series data TD2 acquired from the pressure sensor 61 attached the index finger of the worker WK, an amplitude largely changes in accordance with the operation of pushing the component PT with the index finger. In fitting of the component PT, sound is generated. Therefore, in the second time-series data TD2 acquired from the microphone 62, an amplitude largely changes after the operation of pushing the component PT with the index finger. Further, in fitting of the component PT, a reaction force accompanying pushing of the component PT occurs. When the reaction force is applied to the hand of the worker WK, acceleration applied to the hand of the worker WK changes. Therefore, in the second time-series data TD2 acquired from the acceleration sensor 63, an amplitude largely changes after the operation of pushing the component PT with the index finger.

According to the sixth embodiment described above, the specific operation, which is the identification target of the first time CT1, CT2 and the second time GT1, GT2, is the fitting operation. In the fitting operation, characteristic changes in physical quantities are seen in the second time-series data TD2 acquired from each of the pressure sensor 61 attached to the index finger of the worker WK, the microphone 62 attached to the hand of the worker WK, and the acceleration sensor 63 attached to the hand of the worker WK. In such a mode, the work assist system 1 detects a change in pressure characteristic to the fitting operation from the second time-series data TD2 acquired from the pressure sensor 61 attached to the index finger of the worker WK, and thereby can identify the second time GT1, GT2. Further, the work assist system 1 detects a sound characteristic to the fitting operation from the second time-series data TD2 acquired from the microphone 62 attached to the hand of the worker WK, and thereby can identify the second time GT1, GT2. Furthermore, the work assist system 1 detects a change in inertial force characteristic to the fitting operation from the second time-series data TD2 acquired from the acceleration sensor 63 attached to the hand of the worker WK, and thereby can identify the second time GT1, GT2.

### G. Seventh Embodiment:

This embodiment describes a case in which the specific operation, which is the identification target of the first time CT1, CT2 and the second time GT1, GT2, is the insertion operation. Basic configurations are the same as those of the first embodiment unless otherwise specified.

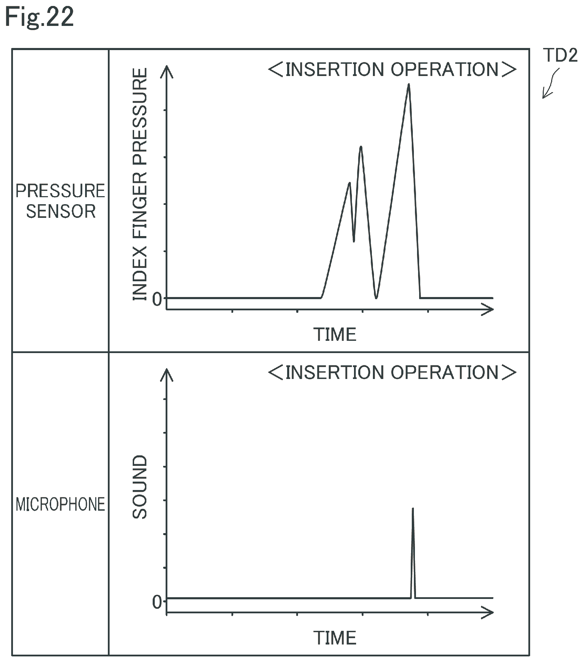

Fig. 22 is a schematic diagram illustrating an example of the second time-series data TD2 acquired from the glove sensor 6 in the insertion operation. Fig. 22 schematically illustrates the second time-series data TD2 acquired from each of the pressure sensors 61 attached to the index finger of the worker WK and the microphone 62 attached to the hand of the worker WK in a period including the insertion operation. Note that Fig. 22 illustrates changes in physical quantities per insertion operation.

In the insertion operation, the worker WK pushes the component PT into the target object TG with the index finger, and thereby the component PT is inserted into the target object TG. Therefore, in the second time-series data TD2 acquired from the pressure sensor 61 attached the index finger of the worker WK, an amplitude largely changes in accordance with the operation of pushing the component PT with the index finger. When the component PT is inserted into the target object TG, sound is generated. Therefore, in the second time-series data TD2 acquired from the microphone 62, an amplitude largely changes in accordance with the operation of pushing the component PT with the index finger.

According to the seventh embodiment described above, the specific operation, which is the identification target of the first time, CT1, CT2 and the second time GT1, GT2, is the insertion operation. In the insertion operation, characteristic changes in physical quantities are seen in the second time-series data TD2 acquired from each of the pressure sensor 61 attached to the index finger of the worker WK and the microphone 62 attached to the hand of the worker WK. In such a mode, the work assist system 1 detects a change in pressure characteristic to the insertion operation from the second time-series data TD2 acquired from the pressure sensor 61 attached to the index finger of the worker WK, and thereby can identify the second time GT1, GT2. Further, the work assist system 1 detects a sound characteristic to the insertion operation from the second time-series data TD2 acquired from the microphone 62 attached to the hand of the worker WK, and thereby can identify the second time GT1, GT2.

### H. Eighth Embodiment:

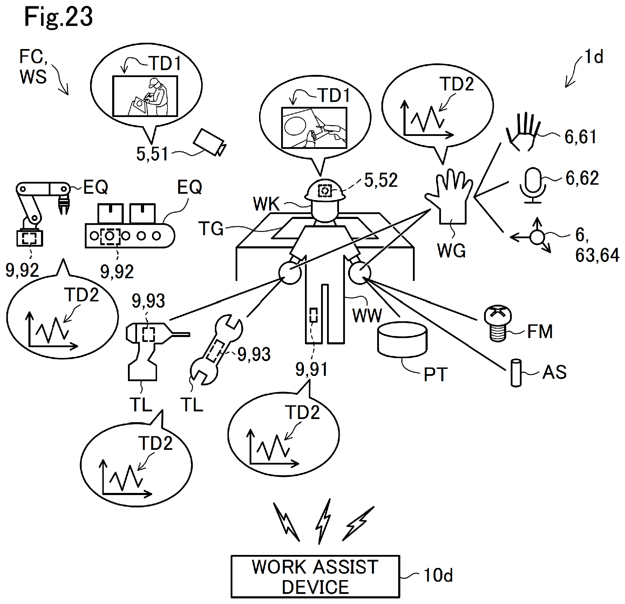

Fig. 23 is an explanatory diagram illustrating a schematic configuration of a work assist system 1d according to an eighth embodiment. In this embodiment, the work assist system 1d includes, instead of or in addition to the camera 5 and the glove sensor 6, a sensor 9 other than the camera 5 and the glove sensor 6. The other sensor 9 is a sensor that senses work by the worker WK, and examples thereof include a workwear sensor 91, an equipment sensor 92, and a tool sensor 93.

The workwear sensor 91 is a sensor attached to a workwear WW worn by the worker WK. The workwear sensor 91 includes, for example, an IMU. For example, the workwear sensor 91 may be attached over the entire workwear WW along a frame of the worker WK to be able to detect motion of the entire body of the worker WK. The workwear sensor 91 may be attached to a part of the workwear WW to be able to detect motion of a part of the worker WK, such as a back and an arm.

The equipment sensor 92 is a sensor attached to equipment EQ used for work. The equipment sensor 92 includes, for example, a vibration sensor.

The tool sensor 93 is a sensor attached to the tool TL used for work. The tool sensor 93 includes, for example, a vibration sensor.

The work assist system 1d assists in work by using a plurality of pieces of time-series data TD1 and TD2 acquired from various sensors, such as the camera 5, the glove sensor 6, the workwear sensor 91, the equipment sensor 92, and the tool sensor 93. That is, the target of work assistance is not limited to the camera 5 and the glove sensor 6.

A work assist device 10d of the work assist system 1d time-synchronizes a plurality of pieces of time-series data TD1 and TD2 acquired from various sensors, such as the camera 5, the glove sensor 6, the workwear sensor 91, the equipment sensor 92, and the tool sensor 93. That is, "second time-series data", "second time axis", and "second time" in the present disclosure may be those related to the other sensor 9. At this time, the work assist device 10d may select an operation for time-synchronizing the time-series data TD1 and TD2 in accordance with confidence of the type of the operation estimated by using the machine learning model MD1, MD2, and thereby time-synchronize the time-series data TD1 and TD2. Furthermore, among a plurality of pieces of time-synchronized time-series data TD1 and TD2, the work assist device 10d may estimate, from the work start time BT and the work end time ET which are determined in one piece of time-series data, the work start time BT and the work end time ET in another piece of time-series data. Furthermore, the work assist device 10d may cause the display device 7 to display a plurality of pieces of time-synchronized time-series data TD1 and TD2. When the second time-series data TD2 acquired from the sensor 9 other than the camera 5 and the glove sensor 6 is used to assist in work, the expressions in the present disclosure can be replaced as follows. The expression "glove sensor" in the present disclosure can be appropriately replaced with "sensor".

According to the eighth embodiment described above, the work assist system 1d can time-synchronize at least two or more pieces of time-series data TD1 and TD2 among a plurality of pieces of time-series data TD1 and TD2 acquired from the plurality of sensors 5, 6, and 9. In such a mode, the work assist system 1d can further assist in work by the worker WK. Therefore, versatility of the work assist system 1d can be improved.

Further, according to the eighth embodiment described above, the work assist system 1d may select an operation for time-synchronizing the time-series data TD1 and TD2 in accordance with confidence of the type of the operation, and thereby time-synchronize the time-series data TD1 and TD2. Also in this case, the work assist system 1d can prioritize confidence of the type of the operation estimated by using the machine learning model into which time-series data having a smaller amount of information for estimating the type of the operation is input, among a plurality of pieces of time-series data TD1 and TD2 acquired from the various sensors 5, 6, and 9. For example, in the second time-series data TD2 acquired from the workwear sensor 91 including an IMU, a change in the operation of the worker WK can be grasped from a change in acceleration of each part of the worker WK. Therefore, the second time-series data TD2 acquired from the workwear sensor 91 can estimate the type of the operation independently without combination with other time-series data TD1, TD2. Accordingly, when ranking of magnitudes of confidence of the respective operations differs, the work assist device 10d prioritizes confidence for the second model MD2 into which the second time-series data TD2 acquired from the glove sensor 6 with a smaller amount of information for estimating the type of the operation than the second time-series data TD2 acquired from the workwear sensor 91 is input. Note that both the first time-series data TD1 acquired from the camera 5 and the second time-series data TD2 acquired from the workwear sensor 91 can estimate the type of the operation independently without combination with other time-series data TD2. Therefore, the work assist device 10d may prioritize the confidence for the machine learning model MD1 or MD2 into which either the first time-series data TD1 acquired from the camera 5 or the second time-series data TD2 acquired from the workwear sensor 91 is input. In such a mode, even when the time-series data TD2 acquired from the other sensor 9 is time-synchronized, the work assist system 1d can time-synchronize a plurality of pieces of time-series data TD1 and TD2 with high precision.

Further, according to the eighth embodiment described above, the work assist system 1d can estimate, from the work start time BT and the work end time ET which are determined in one piece of time-series data among a plurality of pieces of time-synchronized time-series data TD1 and TD2, the work start time BT and the work end time ET in another piece of time-series data. In such a mode, the work assist system 1d can even further assist in work by the worker WK. Therefore, versatility of the work assist system 1d can be further improved.

Further, according to the eighth embodiment described above, the work assist system 1d can cause the display device 7 to display a plurality pieces of time-synchronized time-series data TD1 and TD2. In such a mode, the work assist system 1d can even further assist in work by the worker WK. Therefore, versatility of the work assist system 1d can be further improved.

### I. Othe Embodiments:

### I-1. Another Embodiment 1:

The work assist system 1, 1a to 1d may further include a confirmation unit. The confirmation unit presents information to a user to confirm a correspondence relationship between the various times BT, ET, CT1, CT2, GT1, and GT2 automatically identified or determined by the work assist system 1, 1a to 1d and the time-series data TD1 and TD2 used in identifying or determining them. For example, the confirmation unit causes the display device 7 to display the time-series data TD1 and TD2 at the various times BT, ET, CT1, CT2, GT1, and GT2 automatically identified or determined by the work assist system 1, 1a to 1d, and thereby presents the information to the user to confirm the correspondence relationship. In such a mode, the user compares and collates the various times BT, ET, CT1, CT2, GT1, and GT2 automatically identified or determined by the work assist system 1, 1a to 1d and the time-series data TD1 and TD2, and thereby can act as follows. The user can visually confirm a probability of the various times BT, ET, CT1, CT2, GT1, and GT2 automatically identified or determined by the work assist system 1, 1a to 1d. Thereby, the work assist systems 1, 1a to 1d can cause the user to correct the various times BT, ET, CT1, CT2, GT1, and GT2 automatically identified or determined by the work assist system 1, 1a to 1d as necessary.

### I-2. Another Embodiment 2:

The work assist system 1, 1a to 1d may further include a correction unit. The correction unit receives an input from a user, and thereby corrects the various times BT, ET, CT1, CT2, GT1, and GT2 automatically identified or determined by the work assist system 1, 1a to 1d. In such a mode, the user can correct the various times BT, ET, CT1, CT2, GT1, and GT2 automatically identified or determined by the work assist system 1, 1a to 1d. Thereby, the work assist system 1, 1a to 1d can time-synchronize the time-series data TD1 and TD2 acquired from each of the plurality of sensors 5, 6, and 9 with high precision. Accordingly, the work recognition precision can be improved, and estimation precision of the work start time BT and the work end time ET in the time-series data TD1, TD2 can be improved.

### I-3. Another Embodiment 3:

The work assist system 1, 1a to 1d may be used in the work place WS other than the factory FC for producing vehicles. When the work assist system 1, 1a to 1d assists in work other than the work for producing vehicles, an expression "vehicle" in the present disclosure can be appropriately replaced with "product" or "work target object". In such a mode, versatility of the work assist system 1, 1a to 1d can be improved.

### I-4. Another Embodiment 4:

In each embodiment described above, at least some of the functions of the work assist device 10, 10a to 10d may be implemented as one function of the sensor 5, 6, or 9. In such a mode, the configuration of the work assist system 1, 1a to 1d can be changed as appropriate.

### I-5. Another Embodiment 5:

In each embodiment described above, some or all of the functions and processing implemented by software may be implemented by hardware. Further, some or all of the functions and processing implemented by hardware may be implemented by software. As hardware for implementing various functions in each of the above embodiments, for example, various circuits such as an integrated circuit and a discrete circuit may be used.

The present disclosure is not limited to the embodiments described above, and can be implemented in various configurations without departing from the subject matter of the present disclosure. For example, in order to solve some or all of the aforementioned problems or to achieve some or all of the aforementioned effects, the technical features of the embodiment corresponding to the technical features in each aspect described in the summary can appropriately be substituted or combined. Moreover, unless the technical feature is explained herein as being essential, it can be eliminated as appropriate.

## Claims

1. A work assist system (1;1a;1b;1c;1d) comprising:
a first acquisition unit (111) configured to acquire first time-series data from a camera (5) that images work by a worker;
a second acquisition unit (112) configured to acquire second time-series data from a sensor (6;9) that senses the work;
a first identification unit (113;113a) configured to identify a first time at which a specific operation is performed in the first time-series data;
a second identification unit (114,114a) configured to identify a second time at which the specific operation is performed in the second time-series data; and
a synchronization unit (115,115a) configured to make the first time and the second time correspond to each other to time-synchronize the first time-series data and the second time-series data.

2. The work assist system (1;1a;1b;1c;1d) according to claim 1, wherein the first identification unit (113;113a) is configured to input the first time-series data into a first model and cause the first model to output the first time to identify the first time, the first model being a trained machine learning model,
the second identification unit (114:114a) is configured to input the second time-series data into a second model and cause the second model to output the second time to identify the second time, the second model being a trained machine learning model different from the first model,
the first model is configured to estimate a type of an operation of the worker in each period in the input first time-series data and identify a period in which the specific operation is performed in the first time-series data to output the first time, and
the second model is configured to estimate the type of the operation of the worker in each period in the input second time-series data and identify a period in which the specific operation is performed in the second time-series data to output the second time.

3. The work assist system (1a) according to claim 2, further comprising a memory (120a) storing at least one of a first database and a second database, the first database indicating confidence of the type of the operation estimated by using the first model for each of a plurality of the operations different from each other, the second database indicating confidence of the type of the operation estimated by using the second model for each of the plurality of different operations, wherein
the first identification unit (113a) is configured to identify the first time for each of a plurality of the specific operations of the same type or different types,
the second identification unit (114a) is configured to identify the second time for each of the plurality of specific operations, and
the synchronization unit (115a) is configured to make the first time and the second time correspond to each other for two of the specific operations with the highest and second highest confidence among the plurality of specific operations for which both of the types of the operations and time widths between the operations are consistent between the first time-series data and the second time-series data, to time-synchronize the first time-series data and the second time-series data.

4. The work assist system (1a) according to claim 3, wherein when ranking of magnitudes of the confidence for respective operations differs between the first model and the second model, the synchronization unit (115a) is configured to preferentially make the first time and the second time correspond to each other for two of the specific operations with the highest and second highest confidence of the type of the operation estimated by using the machine learning model into which, between the first time-series data and the second time-series data, time-series data having a smaller amount of information for estimating the type of the operation is input, to time-synchronize the first time-series data and the second time-series data.

5. The work assist system (1b) according to any one of claims 1 to 4, further comprising:
a determination unit (116) configured to determine a work start time at which a predetermined start operation is performed in the first time-series data and determine a work end time at which a predetermined end operation is performed in the first time-series data; and
an estimation unit (117) configured to estimate the work start time and the work end time in the second time-series data from the work start time and the work end time which are determined in the first time-series data.

6. The work assist system (1c) according to any one of claims 1 to 5, further comprising a display control unit (118) configured to cause a display device (7) to display the first time-series data and the second time-series data which are time-synchronized.

7. The work assist system (1;1a;1b;1c;1d) according to any one of claims 1 to 6, wherein the camera (5) is a wearable camera (52) attached to the worker and capable of acquiring the first time-series data of a first-person point of view that is a viewpoint from the worker.

8. The work assist system (1;1a;1b;1c;1d) according to any one of claims 1 to 7, wherein the camera (5) is a fixed-point camera (51) installed at a work place at which the worker performs the work and capable of acquiring the first time-series data of a third-person point of view that is a viewpoint from a third party seeing the worker.

9. The work assist system (1;1a;1b;1c;1d) according to any one of claims 1 to 8, wherein the sensor (6;9) comprises at least one of:
a pressure sensor (61) to detect a change in pressure accompanying the operation of the worker;
a microphone (62) to detect a sound around the worker;
an acceleration sensor (63) to detect a change in acceleration accompanying the operation of the worker; and
a gyro sensor (64) to detect a change in angular velocity accompanying the operation of the worker.

10. The work assist system (1;1a;1b;1c;1d) according to any one of claims 1 to 9, wherein the specific operation is at least one of:
a tightening operation of tightening a component to a target object;
a taking-out operation of taking out a predetermined object;
a fitting operation of fitting two or more of the components; and
an insertion operation of inserting the component into the target object.

11. A work assist method comprising:
an identification step of identifying a first time at which a specific operation is performed in first time-series data acquired from a camera (5) that images work by a worker and identifying a second time at which the specific operation is performed in second time-series data acquired from a sensor (6;9) that senses the work; and
a synchronization step of making the first time and the second time correspond to each other to time-synchronize the first time-series data and the second time-series data.
